# EUROPEAN PATENT SPECIFICATION

(11) **EP 3 484 110 B1**
(45) Date of publication and mention of the grant of the patent: **24.04.2024**
(21) Application number: 17823633.7
(22) Date of filing: 05.07.2017
(51) Int. Cl.: H04L 27/26

(54) **DATA GENERATION METHOD AND APPARATUS, TRANSMITTER, AND TERMINAL**
VERFAHREN UND VORRICHTUNG ZUR DATENERZEUGUNG, SENDER UND ENDGERÄT
PROCÉDÉ ET APPAREIL DE GÉNÉRATION DE DONNÉES, ÉMETTEUR ET TERMINAL

(30) Priority: 08.07.2016 CN 201610539164
(43) Date of publication of application: 15.05.2019
(73) Proprietor: ZTE Corporation, Shenzhen, Guangdong 518057 (CN)
(72) Inventor: LI, Weimin, Shenzhen Guangdong 518057 (CN); YUAN, Zhifeng, Shenzhen Guangdong 518057 (CN); YAN, Chunlin, Shenzhen Guangdong 518057 (CN); YUAN, Yifei, Shenzhen Guangdong 518057 (CN)
(74) Representative: Aipex B.V.
(86) International application number: PCT/CN2017/091829
(87) International publication number: WO 2018/006821

(56) References cited:
- CN-A- 103 326 981
- CN-A- 103 414 495
- CN-A- 103 748 480
- CN-A- 105 515 713
- CN-A- 106 160 787
- US-A1- 2005 147 190
- ZTE: "Contention-based non-orthogonal multiple access for UL mMTC", 3GPP DRAFT; R1-164269 MULTIPLE ACCESS FOR MMTC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Nanjing, China; 20160523 - 20160527 14 May 2016 (2016-05-14), XP051096507, Retrieved from the Internet: URL:http://www.3gpp.org/ftp/tsg_ran/WG1_RL 1/TSGR1_85/Docs/ [retrieved on 2016-05-14]
- ZTE: "Discussion on multiple access for new radio interface", 3GPP DRAFT; R1-162226 DISCUSSION ON MULTIPLE ACCESS FOR NEW RADIO INTERFACE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CE , vol. RAN WG1, no. Busan, Korea; 20160411 - 20160415 1 April 2016 (2016-04-01), XP051079526, Retrieved from the Internet: URL:http://www.3gpp.org/ftp/tsg_ran/WG1_RL 1/TSGR1_84b/Docs/ [retrieved on 2016-04-01]
- LG ELECTRONICS: "Remaining issues on uplink narrowband DM-RS", 3GPP DRAFT; R1-162462, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Busan, South Korea; 20160411 - 20160415 6 April 2016 (2016-04-06), XP051080710, Retrieved from the Internet: URL:http://www.3gpp.org/ftp/tsg_ran/WG1_RL 1/TSGR1_84b/Docs/ [retrieved on 2016-04-06]

## Description

### TECHNICAL FIELD

The present invention relates to wireless communications and, in particular, to a data generation method and device, a transmitter and a terminal.

### BACKGROUND

In a related art, application scenarios of the 5G communication technology may include an enhanced mobile broadband (eMBB) scenario, a massive machine type communication (mMTC) scenario, and an ultra-reliability low latency communication (URLLC). The eMBB scenario is used to support mobile broadband and its main service requirements are large data packet transmission, high data rate, and high spectrum efficiency. The mMTC scenario is used to support massive device communication and its main service requirements are massive devices and small data packet transmission. Currently, the design goal determined by the ITU and 3GPP on the mMTC scenario is to support the connection with the density of 1 million devices/*km*². The URLLC scenario is used to support high-reliability and low-latency communication and its main service requirements are low transmission latency and high reliability requirements.

For the requirements of massive devices and small data packet transmission in mMTC scenario and the requirements of low transmission latency in URLLC scenario in the 5G communication technology, a conventional communication process or a data transmission method based on terminal random access and base station scheduling cannot satisfy these requirements, mainly due to limited system access device capacity, time-consuming access and data transmission process, and high signaling overhead.

In order to satisfy these 5G technology requirements, a contention-based or scheduling-free (or grant-free) access and data transmission method may be adopted. When a terminal device needs to transmit data, the data is transmitted immediately after the terminal device completes downlink synchronization and receives a system broadcast message, so that the time-consuming and complicated random access process and the scheduling process may be eliminated, thereby greatly reducing transmission latency and signaling overhead.

A natural way of implementing the contention-based or scheduling-free access is to adopt code division, for example, spreading or interleaving with the sequences. This way is beneficial for users to reuse the same transmission resource (such as the time-frequency resource) and beneficial to identify and detect multiple terminal devices that are simultaneously accessed.

The design of the code or the sequence is very important. A certain number of codes or sequences with low cross-correlation are beneficial to control the collisions of access devices and the detection complexity of the receiver, thereby implementing effective contention-based or scheduling-free access.

The applicant found that the 3GPP organization is studying and evaluating new radio access technology (NR or New RAT) that satisfies 5G requirements, and the contention-based or scheduling-free access technology is one of multiple access technology candidates. A technical literature 3GPP draft R1-164269 introduces about contention-based non-orthogonal multiple access for UL mMTC. A technical literature 3GPP draft R1-162226 introduces about multiple access for new radio interface. A technical literature 3GPP draft R1-162462 introduces about sequence design for uplink narrowband DM-RS.

However, for the design of the code or sequence of the contention-based or scheduling-free access technology as well as the corresponding data processing and data transmission method, no specific or complete solution has been provided.

In view of the above problem in the related art, no effective solution has yet been proposed.

### SUMMARY

The appended independent claims define the scope of protection of the invention. Embodiments of the present invention provide a data generation method and device, a transmitter and a terminal to solve at least the problems of the scheduling-free access sequence design and the data processing and transmission in the related art.

According to an embodiment of the present invention, a data generation method is provided. The method includes: determining a sequence to be used from a sequence set, where the sequence set includes N sequences having a length of L and includes at least one of following characteristics: an absolute value of cross-correlation between any two sequences among the N sequences being not greater than a first preset threshold, a square sum of non-diagonal elements of a cross-correlation matrix of the N sequences being equal to a second preset threshold, the N sequences including sequences whose elements come from a first real number set, the N sequences including sequences whose elements each have a real part and an imaginary part coming from a second real number set, the N sequences including sequences whose elements each have an amplitude equaling to M and a phase coming from a third real number set, and the N sequences including sequences whose elements come from a first complex number set, where N and L are positive integers and M is a real number; and processing a first symbol by using the sequence to be used so as to generate a second symbol.

Optionally, the absolute value of cross-correlation between any two sequences among the N sequences being not greater than a first preset threshold includes one of:
the absolute value of cross-correlation between any two sequences, after energy of each of any two sequences is normalized, among the N sequences being not greater than the first preset threshold, and
the absolute value of cross-correlation between any two sequences, after the energy of each of any two sequences is normalized, among the N sequences being the same and being equal to the first preset threshold,
where the first preset threshold includes 0.5, sqrt(2)/2, 0.8 or sqrt((N-L)/(L*(N-1))), and sqrt() is a square root function.

Optionally, the square sum of non-diagonal elements of a cross-correlation matrix of the N sequences being equal to a second preset threshold includes the square sum of the non-diagonal elements of the cross-correlation matrix of the N sequences, after energy of each of the N sequences is normalized, being equal to the second preset threshold, where the second preset threshold includes N*(N-L)/L.

Optionally, a value of the sequence length L includes one of: 4, 6 or 8, where L represents the number of elements in the sequence.

Optionally, the number of sequences N is a square of the sequence length L.

Optionally, the first real number set includes: {0, 1}, {-1, 1}, {-0.5, 0.5} or {0, sqrt(2)}. Optionally, the second real number set includes: {-1, 1}, {-sqrt(2)/2, sqrt(2)/2}, {-sqrt(2)/4, sqrt(2)/4}, {-1, 0, 1}, {-0.5, 0, 0.5}, {-0.5, -sqrt(2)/4, 0, sqrt(2)/4, 0.5}, {-sqrt(2), 0, sqrt(2)} or {-3, -1, 1, 3}.

Optionally, the third real number set includes: {-3, -1, 1, 3}*π/4, {0, 1, 2, 3}*π/2, {0, 1, 2, 3, 4, 5, 6, 7}*π/4, n*k*2π/N or -n*k*2π/N, where k is an integer and n is equal to 0, 1, ..., or N. Optionally, the first complex number set includes:
{1+1i, -1+1i, -1-1i, 1-1i},
{(1+1i)/sqrt(2), (-1+1i)/sqrt(2), (-1-li)/sqrt(2), (1-1i)/sqrt(2)},
{(1+1i)*sqrt(2)/4, (-1+1i)*sqrt(2)/4, (-1-li)*sqrt(2)/4, (1-1i)*sqrt(2)/4},
{1+0i, 0+1i, -1+0i, 0-1i},
{0.5+0i, 0+0.5i, -0.5+0i, 0-0.5i},
{1+1i, -1+1i, -1-1i, 1-1i, 0},
{1+0i, 0+1i, -1+0i, 0-1i, 0},
{0.5+0i, 0+0.5i, -0.5+0i, 0-0.5i, 0},
{0.5+0.5i, -0.5+0.5i, -0.5-0.5i, 0.5-0.5i, 0}, or
{0, 1, 1+1i, 1i, -1+li, -1, -1-1i, -1i, 1-1i}.

Optionally, the sequence set includes one of: a preset sequence set, and one sequence set of a plurality of preset sequence sets, where the one sequence set is determined by one of: system fixed configuration, system static configuration, system semi-static configuration, and random selection from the plurality of preset sequence sets.

Optionally, the sequence set includes one of sequence sets shown in Table 1, Table 2, Table 3, Table 4 or Table 5:

**Table 1**

| sequence index | sequence elements | | | |
|---|---|---|---|---|
| 0 | 1 | 1 | 1 | 1 |
| 1 | 1 | exp(-j*1*1*2π/13) | exp(-j*1*3*2π/13) | exp(-j*1*9*2π/13) |
| 2 | 1 | exp(-j*2*1*2π/13) | exp(-j*2*3*2π/13) | exp(-j*2*9*2π/13) |
| 3 | 1 | exp(-j*3*1*2π/13) | exp(-j*3*3*2π/13) | exp(-j*3*9*2π/13) |
| 4 | 1 | exp(-j*4*1*2π/13) | exp(j*4*3*2π/13) | exp(-j*4*9*2π/13) |
| 5 | 1 | exp(-j*5*1*2π/13) | exp(-j*5*3*2π/13) | exp(-j*5*9*2π/13) |
| 6 | 1 | exp(-j*6*1*2π/13) | exp(-j*6*3*2π/13) | exp(-j*6*9*2π/13) |
| 7 | 1 | exp(-j*7*1*2π/13) | exp(-j*7*3*2π/13) | exp(-j*7*9*2π/13) |
| 8 | 1 | exp(-j*8*1*2π/13) | exp(-j*8*3*2π/13) | exp(-j*8*9*2π/13) |
| 9 | 1 | exp(-j*9*1*2π/13) | exp(-j*9*3*2π/13) | exp(-j*9*9*2π/13) |
| 10 | 1 | exp(-j*10*1*2π/13) | exp(-j*10*3*2π/13) | exp(-j*10*9*2π/13) |
| 11 | 1 | exp(-j*11*1*2π/13) | exp(-j*11*3*2π/13) | exp(-j**9*2π/13) |
| 12 | 1 | exp(-j*12*1*2π/13) | exp(-j*12*3*2π/13) | exp(-j*12*9*2π/13) |

**Table 2**

| sequence index | sequence elements | | | |
|---|---|---|---|---|
| 0 | 1+1i | 1+1i | 1+1i | -1-1i |
| 1 | 1+1i | 1+1i | -1+li | -1+li |
| 2 | 1+1i | 1+1i | -1-1i | 1+1i |
| 3 | 1+1i | 1+1i | 1-1i | 1-1i |
| 4 | 1+1i | -1+1i | 1+1i | -1+1i |
| 5 | 1+1i | -1+1i | -1+1i | 1+1i |
| 6 | 1+1i | -1+1i | -1-1i | 1-1i |
| 7 | 1+1i | -1+1i | 1-1i | -1-1i |
| 8 | 1+1i | -1-1i | 1+1i | 1+1i |
| 9 | 1+1i | -1-1i | -1+1i | 1-1i |
| 10 | 1+1i | -1-1i | -1-1i | -1-1i |
| 11 | 1+1i | -1-1i | 1-1i | -1+1i |
| 12 | 1+1i | 1-1i | 1+1i | 1-1i |
| 13 | 1+1i | 1-1i | -1+1i | -1-1i |
| 14 | 1+1i | 1-1i | -1-1i | -1+1i |
| 15 | 1+1i | 1-1i | 1-1i | 1+1i |

**Table 3**

| sequence index | sequence elements | | | |
|---|---|---|---|---|
| 0 | 1+0i | 1+0i | 1+0i | -1+0i |
| 1 | 1+0i | 1+0i | 0+1i | 0+1i |
| 2 | 1+0i | 1+0i | -1+0i | 1+0i |
| 3 | 1+0i | 1+0i | 0-1i | 0-1i |
| 4 | 1+0i | 0+1i | 1+0i | 0+1i |
| 5 | 1+0i | 0+1i | 0+1i | 1+0i |
| 6 | 1+0i | 0+1i | -1+0i | 0-1i |
| 7 | 1+0i | 0+1i | 0-1i | -1+0i |
| 8 | 1+0i | -1+0i | 1+0i | 1+0i |
| 9 | 1+0i | -1+0i | 0+1i | 0-1i |
| 10 | 1+0i | -1+0i | -1+0i | -1+0i |
| 11 | 1+0i | -1+0i | 0-1i | 0+1i |
| 12 | 1+0i | 0-1i | 1+0i | 0-1i |
| 13 | 1+0i | 0-1i | 0+1i | -1+0i |
| 14 | 1+0i | 0-1i | -1+0i | 0+1i |
| 15 | 1+0i | 0-1i | 0-1i | 1+0i |

**Table 4**

| sequence index | sequence elements | | | |
|---|---|---|---|---|
| 0 | 1+1i | 1+1i | 1+1i | 1+1i |
| 1 | 1+1i | 1+1i | 1+1i | -1-1i |
| 2 | 1+1i | 1+1i | -1-1i | 1+1i |
| 3 | 1+1i | 1+1i | -1-1i | -1-1i |
| 4 | 1+1i | 1+1i | -1+1i | -1+1i |
| 5 | 1+1i | 1+1i | -1+1i | 1-1i |
| 6 | 1+1i | 1+1i | 1-1i | -1+1i |
| 7 | 1+1i | 1+1i | 1-1i | 1-1i |
| 8 | 1+1i | -1+1i | 1+1i | -1+1i |
| 9 | 1+1i | -1+1i | 1+1i | 1-1i |
| 10 | 1+1i | -1+1i | -1-1i | -1+1i |
| 11 | 1+1i | -1+1i | -1-1i | 1-1i |
| 12 | 1+1i | -1+1i | -1+1i | 1+1i |
| 13 | 1+1i | -1+1i | -1+1i | -1-1i |
| 14 | 1+1i | -1+1i | 1-1i | 1+1i |
| 15 | 1+1i | -1+1i | 1-1i | -1-1i |
| 16 | 1+1i | -1-1i | 1+1i | 1+1i |
| 17 | 1+1i | -1-1i | 1+1i | -1-1i |
| 18 | 1+1i | -1-1i | -1-1i | 1+1i |
| 19 | 1+1i | -1-1i | -1-1i | -1-1i |
| 20 | 1+1i | -1-1i | -1+1i | -1+1i |
| 21 | 1+1i | -1-1i | -1+1i | 1-1i |
| 22 | 1+1i | -1-1i | 1-1i | -1+1i |
| 23 | 1+1i | -1-1i | 1-1i | 1-1i |
| 24 | 1+1i | 1-1i | 1+1i | -1+1i |
| 25 | 1+1i | 1-1i | 1+1i | 1-1i |
| 26 | 1+1i | 1-1i | -1-1i | -1+1i |
| 27 | 1+1i | 1-1i | -1-1i | 1-1i |
| 28 | 1+1i | 1-1i | -1+1i | 1+1i |
| 29 | 1+1i | 1-1i | -1+1i | -1-1i |
| 30 | 1+1i | 1-1i | 1-1i | 1+1i |
| 31 | 1+1i | 1-1i | 1-1i | -1-1i |

**Table 5**

| sequence index | sequence elements | | | |
|---|---|---|---|---|
| 0 | 1+1i | 1+1i | 1+1i | 1+1i |
| 1 | 1+1i | 1+1i | 1+1i | -1+1i |
| 2 | 1+1i | 1+1i | 1+1i | -1-1i |
| 3 | 1+1i | 1+1i | 1+1i | 1-1i |
| 4 | 1+1i | 1+1i | -1+1i | 1+1i |
| 5 | 1+1i | 1+1i | -1+1i | -1+1i |
| 6 | 1+1i | 1+1i | -1+1i | -1-1i |
| 7 | 1+1i | 1+1i | -1+1i | 1-1i |
| 8 | 1+1i | 1+1i | -1-1i | 1+1i |
| 9 | 1+1i | 1+1i | -1-1i | -1+1i |
| 10 | 1+1i | 1+1i | -1-1i | -1-1i |
| 11 | 1+1i | 1+1i | -1-1i | 1-1i |
| 12 | 1+1i | 1+1i | 1-1i | 1+1i |
| 13 | 1+1i | 1+1i | 1-1i | -1+1i |
| 14 | 1+1i | 1+1i | 1-1i | -1-1i |
| 15 | 1+1i | 1+1i | 1-1i | 1-1i |
| 16 | 1+1i | -1+1i | 1+1i | 1+1i |
| 17 | 1+1i | -1+1i | 1+1i | -1+1i |
| 18 | 1+1i | -1+1i | 1+1i | -1-1i |
| 19 | 1+1i | -1+1i | 1+1i | 1-1i |
| 20 | 1+1i | -1+1i | -1+1i | 1+1i |
| 21 | 1+1i | -1+1i | -1+1i | -1+1i |
| 22 | 1+1i | -1+1i | -1+1i | -1-1i |
| 23 | 1+1i | -1+1i | -1+1i | 1-1i |
| 24 | 1+1i | -1+1i | -1-1i | 1+1i |
| 25 | 1+1i | -1+1i | -1-1i | -1+1i |
| 26 | 1+1i | -1+1i | -1-1i | -1-1i |
| 27 | 1+1i | -1+1i | -1-1i | 1-1i |
| 28 | 1+1i | -1+1i | 1-1i | 1+1i |
| 29 | 1+1i | -1+1i | 1-1i | -1+1i |
| 30 | 1+1i | -1+1i | 1-1i | -1-1i |
| 31 | 1+1i | -1+1i | 1-1i | 1-1i |
| 32 | 1+1i | -1-1i | 1+1i | 1+1i |
| 33 | 1+1i | -1-1i | 1+1i | -1+1i |
| 34 | 1+1i | -1-1i | 1+1i | -1-1i |
| 35 | 1+1i | -1-1i | 1+1i | 1-1i |
| 36 | 1+1i | -1-1i | -1+1i | 1+1i |
| 37 | 1+1i | -1-1i | -1+1i | -1+1i |
| 38 | 1+1i | -1-1i | -1+1i | -1-1i |
| 39 | 1+1i | -1-1i | -1+1i | 1-1i |
| 40 | 1+1i | -1-1i | -1-1i | 1+1i |
| 41 | 1+1i | -1-1i | -1-1i | -1+1i |
| 42 | 1+1i | -1-1i | -1-1i | -1-1i |
| 43 | 1+1i | -1-1i | -1-1i | 1-1i |
| 44 | 1+1i | -1-1i | 1-1i | 1+1i |
| 45 | 1+1i | -1-1i | 1-1i | -1+1i |
| 46 | 1+1i | -1-1i | 1-1i | -1-1i |
| 47 | 1+1i | -1-1i | 1-1i | 1-1i |
| 48 | 1+1i | 1-1i | 1+1i | 1+1i |
| 49 | 1+1i | 1-1i | 1+1i | -1+1i |
| 50 | 1+1i | 1-1i | 1+1i | -1-1i |
| 51 | 1+1i | 1-1i | 1+1i | 1-1i |
| 52 | 1+1i | 1-1i | -1+1i | 1+1i |
| 53 | 1+1i | 1-1i | -1+1i | -1+1i |
| 54 | 1+1i | 1-1i | -1+1i | -1-1i |
| 55 | 1+1i | 1-1i | -1+1i | 1-1i |
| 56 | 1+1i | 1-1i | -1-1i | 1+1i |
| 57 | 1+1i | 1-1i | -1-1i | -1+1i |
| 58 | 1+1i | 1-1i | -1-1i | -1-1i |
| 59 | 1+1i | 1-1i | -1-1i | 1-1i |
| 60 | 1+1i | 1-1i | 1-1i | 1+1i |
| 61 | 1+1i | 1-1i | 1-1i | -1+1i |
| 62 | 1+1i | 1-1i | 1-1i | -1-1i |
| 63 | 1+1i | 1-1i | 1-1i | 1-1i |

where i and j are imaginary units.

Optionally, the sequence set includes a sequence set composed of one of the sequence sets shown in Table 1, Table 2, Table 3, Table 4 or Table 5 and a unit matrix sequence set, where a length of each of a plurality of sequences in the unit matrix sequence set is the same as a length of each of a plurality of sequences in the sequence set shown in Table 1, Table 2, Table 3, Table 4 or Table 5, and

where the unit matrix sequence set is shown in Table 6 and includes:

**Table 6**

| sequence index | sequence elements | | | |
|---|---|---|---|---|
| 0 | 1*a | 0 | 0 | 0 |
| 1 | 0 | 1*a | 0 | 0 |
| 2 | 0 | 0 | 1*a | 0 |
| 3 | 0 | 0 | 0 | 1*a |

Where a is an energy adjustment factor which enables the energy of each of the plurality of sequences in the unit matrix sequence set to be the same as the energy of each of the plurality of sequences in the sequence set shown in Table 1, Table 2, Table 3, Table 4 or Table 5.

Optionally, the determining a sequence to be used from a sequence set includes one of: randomly selecting X sequences from the sequence set, and letting the selected X sequences as X sequences to be used;
randomly selecting X sequences from the sequence set, randomly selecting one cyclic shift, and performing cyclic shift processing on each of the selected X sequences according to the one cyclic shift to obtain X sequences to be used;
randomly selecting X sequences from the sequence set, randomly selecting one cyclic shift for each of the selected X sequences, and performing cyclic shift processing on each of the selected X sequences according to the corresponding cyclic shift to obtain X sequences to be used; or obtaining X sequences from the sequence set according to system configuration information, and letting the obtained X sequences as X sequences to be used,
where X is a positive integer.

Optionally, the processing a first symbol by using the sequence to be used so as to generate a second symbol includes: performing spreading process on the first symbol by using the sequence to be used so as to generate a second symbol.

Optionally, the first symbol includes at least one of: a symbol generated by performing encoding and modulation on data bits to be transmitted, a pilot symbol and a reference signal.

Optionally, the data bits to be transmitted includes at least one of: traffic data information, identification information, information of the sequence to be used and information of the sequence set.

Optionally, the method further includes: transmitting the second symbol.

Optionally, the transmitting the second symbol includes: generating a signal by the second symbol on a transmission resource, and transmitting the signal.

Optionally, the transmitting the second symbol includes at least one of: transmitting, by a terminal side device, the second symbol, and transmitting, by a base station side device, the second symbol. According to an embodiment of the present invention, a data generation device is provided. The device includes: a determination module, which is configure to determine a sequence to be used from a sequence set, where the sequence set includes N sequences having a length of L and includes at least one of following characteristics: an absolute value of cross-correlation between any two sequences among the N sequences being not greater than a first preset threshold, a square sum of non-diagonal elements of a cross-correlation matrix of the N sequences being equal to a second preset threshold, the N sequences including sequences whose elements come from a first real number set, the N sequences including sequences whose elements each have a real part and an imaginary part coming from a second real number set, the N sequences including sequences whose elements each have an amplitude equaling to M and a phase coming from a third real number set, and the N sequences including sequences whose elements come from a first complex number set, where N and L are positive integers and M is a real number; and a generation module, which is configured to process a first symbol by using the sequence to be used so as to generate a second symbol.

Optionally, the device further includes a transmission module, which is configured to transmit the second symbol.

According to an embodiment of the present invention, a transmitter is provided. The transmitter includes: a determination module, which is configure to determine a sequence to be used from a sequence set, where the sequence set includes N sequences having a length of L and includes at least one of following characteristics: an absolute value of cross-correlation between any two sequences among the N sequences being not greater than a first preset threshold, a square sum of non-diagonal elements of a cross-correlation matrix of the N sequences being equal to a second preset threshold, the N sequences including sequences whose elements come from a first real number set, the N sequences including sequences whose elements each have a real part and an imaginary part coming from a second real number set, the N sequences including sequences whose elements each have an amplitude equaling to M and a phase coming from a third real number set, and the N sequences including sequences whose elements come from a first complex number set, where N and L are positive integers and M is a real number; and a generation module, which is configured to process a first symbol by using the sequence to be used so as to generate a second symbol.

Optionally, the transmitter further includes a transmission module, which is configured to transmit the second symbol.

According to an embodiment of the present invention, a terminal is provided. The terminal includes: a determination module, which is configure to determine a sequence to be used from a sequence set, where the sequence set includes N sequences having a length of L and includes at least one of following characteristics: an absolute value of cross-correlation between any two sequences among the N sequences being not greater than a first preset threshold, a square sum of non-diagonal elements of a cross-correlation matrix of the N sequences being equal to a second preset threshold, the N sequences including sequences whose elements come from a first real number set, the N sequences including sequences whose elements each have a real part and an imaginary part coming from a second real number set, the N sequences including sequences whose elements each have an amplitude equaling to M and a phase coming from a third real number set, and the N sequences including sequences whose elements come from a first complex number set, where N and L are positive integers and M is a real number; and a generation module, which is configured to process a first symbol by using the sequence to be used so as to generate a second symbol.

Optionally, the terminal further includes a transmission module, which is configured to transmit the second symbol.

According to an embodiment of the present invention, a storage medium is provided. The storage medium is configured to store program codes for executing following steps: determining a sequence to be used from a sequence set, where the sequence set includes N sequences having a length of L and includes at least one of following characteristics: an absolute value of cross-correlation between any two sequences among the N sequences being not greater than a first preset threshold, a square sum of non-diagonal elements of a cross-correlation matrix of the N sequences being equal to a second preset threshold, the N sequences including sequences whose elements come from a first real number set, the N sequences including sequences whose elements each have a real part and an imaginary part coming from a second real number set, the N sequences including sequences whose elements each have an amplitude equaling to M and a phase coming from a third real number set, and the N sequences including sequences whose elements come from a first complex number set, where N and L are positive integers and M is a real number; and processing a first symbol by using the sequence to be used so as to generate a second symbol. Optionally, the storage medium is further configured to store program codes for executing the following step: transmitting the second symbol.

According to the embodiments of the present invention, since the sequence set used by the provided data generation method includes a certain number of sequences with better cross-correlation features, the collision probability of the access devices may be maintained at a low level, and the detection complexity of the receiver may be reduced. Therefore, the problems of the sequence design for scheduling-free access and the data processing and transmission are solved, and impacts of access device collisions and the detection complexity of the receiver on scheduling-free access performance are effectively controlled, thereby effectively implementing contention-based or scheduling-free access and data transmission.

### BRIEF DESCRIPTION OF DRAWINGS

The drawings described herein are used to provide a further understanding of the present invention and form a part of the present application. The exemplary embodiments and descriptions thereof in the present invention are used to explain the present invention and not to limit the present invention in any improper way. In the drawings:
FIG. 1 is a flowchart of a data generation method according to an embodiment of the present invention;
FIG. 2 is a schematic diagram of an obtaining process of a sequence set according to an application example 3 of the present invention;
FIG. 3 is a schematic diagram of a cross-correlation matrix of N sequences according to an application example 3 of the present invention;
FIG. 4 is a structure diagram of a data generation device according to an embodiment of the present invention;
FIG. 5 is a structure diagram of a transmitter according to an embodiment of the present invention; and
FIG. 6 is a structure diagram of a terminal according to an embodiment of the present invention.

### DETAILED DESCRIPTION

Hereinafter the present invention will be described in detail with reference to the drawings in conjunction with the embodiments. It is to be noted that if not in collision, the embodiments and features therein in the present application may be combined with each other.

It is to be noted that the terms "first", "second" and the like in the specification, claims and drawings of the present invention are used to distinguish between similar objects and are not necessarily used to describe a particular order or sequence.

### Embodiment 1

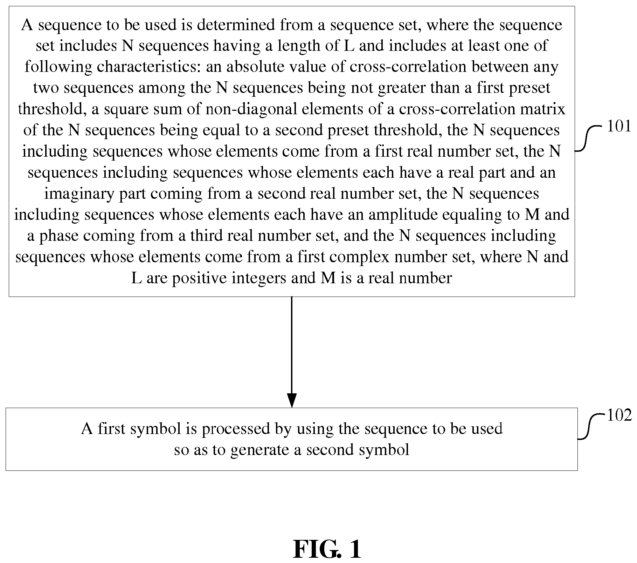

This embodiment provides a data generation method applied to a transmitter. FIG. 1 is a flowchart of a data generation method according to an embodiment of the present invention. As shown in FIG. 1, the method includes step 101 and step 102.

In step 101, a sequence to be used is determined from a sequence set, where the sequence set includes N sequences having a length of L and includes at least one of following characteristics: an absolute value of cross-correlation between any two sequences among the N sequences being not greater than a first preset threshold, a square sum of non-diagonal elements of a cross-correlation matrix of the N sequences being equal to a second preset threshold, the N sequences including sequences whose elements come from a first real number set, the N sequences including sequences whose elements each have a real part and an imaginary part coming from a second real number set, the N sequences including sequences whose elements each have an amplitude equaling to M and a phase coming from a third real number set, and the N sequences including sequences whose elements come from a first complex number set, where N and L are positive integers and M is a real number.

In step 102, a first symbol is processed by using the sequence to be used so as to generate a second symbol.

Optionally, this embodiment may, but may not necessarily, be executed by a base station, or a terminal.

Furthermore, after the step 102, the method further includes step 103: transmitting the second symbol.

Optionally, the absolute value of cross-correlation between any two sequences among the N sequences being not greater than a first preset threshold includes one of:
the absolute value of cross-correlation between any two sequences, after energy of each of any two sequences is normalized, among the N sequences being not greater than the first preset threshold, and
the absolute value of cross-correlation between any two sequences, after the energy of each of any two sequences is normalized, among the N sequences being the same and being equal to the first preset threshold,
where the first preset threshold includes 0.5, sqrt(2)/2, 0.8 or sqrt((N-L)/(L*(N-1))), and sqrt() is a square root function.

Optionally, the square sum of non-diagonal elements of a cross-correlation matrix of the N sequences being equal to a second preset threshold includes:
the square sum of the non-diagonal elements of the cross-correlation matrix of the N sequences,
after energy of each of the N sequences is normalized, being equal to the second preset threshold,
where the second preset threshold includes N*(N-L)/L.

Optionally, a value of the sequence length L includes one of: 4, 6 and 8. Specifically, the sequence length L refers to the number of elements in the sequence.

Optionally, the number of sequences N is a square of the sequence length L.

Optionally, the first real number set includes: {0, 1}, {-1, 1}, {-0.5, 0.5} or {0, sqrt(2)}. Optionally, the second real number set includes: {-1, 1}, {-sqrt(2)/2, sqrt(2)/2}, {-sqrt(2)/4, sqrt(2)/4}, {-1, 0, 1}, {-0.5, 0, 0.5}, {-0.5, -sqrt(2)/4, 0, sqrt(2)/4, 0.5}, {-sqrt(2), 0, sqrt(2)} or {-3, -1, 1, 3}.

Optionally, the third real number set includes: {-3, -1, 1, 3}*π/4, {0, 1, 2, 3}*π/2, {0, 1, 2, 3, 4, 5, 6, 7}*π/4, n*k*2π/N or -n*k*2π/N, where k is an integer and n is equal to 0, 1, ..., or N. Optionally, the first complex number set includes:
{1+1i, -1+1i, -1-1i, 1-1i},
{(1+1i)/sqrt(2), (-1+1i)/sqrt(2), (-1-1i)/sqrt(2), (1-1i)/sqrt(2)},
{(1+1i)*sqrt(2)/4, (-1+1i)*sqrt(2)/4, (-1-1i)*sqrt(2)/4, (1-1i)*sqrt(2)/4},
{1+0i, 0+1i, -1+0i, 0-1i},
{0.5+0i, 0+0.5i, -0.5+0i, 0-0.5i},
{1+1i, -1+1i, -1-1i, 1-1i, 0},
{1+0i, 0+1i, -1+0i, 0-1i, 0},
{0.5+0i, 0+0.5i, -0.5+0i, 0-0.5i, 0},
{0.5+0.5i, -0.5+0.5i, -0.5-0.5i, 0.5-0.5i, 0}, or
{0, 1, 1+li, 1i, -1+1i, -1, -1-1i, -1i, 1-1i}.

Optionally, the sequence set includes one of:
a preset sequence set; and
one sequence set of a plurality of preset sequence sets, where the one sequence set is determined by one of: system fixed configuration, system static configuration, system semi-static configuration, and random selection from the plurality of preset sequence sets.

Optionally, the step in which a sequence to be used is determined from a sequence set includes one of:
randomly selecting X sequences from the sequence set, and letting the selected X sequences as X sequences to be used;
randomly selecting X sequences from the sequence set, randomly selecting one cyclic shift, and performing cyclic shift processing on each of the selected X sequences according to the one cyclic shift to obtain X sequences to be used;
randomly selecting X sequences from the sequence set, randomly selecting one cyclic shift for each of the selected X sequences, and performing cyclic shift processing on each of the selected X sequences according to the corresponding cyclic shift to obtain X sequences to be used; and obtaining X sequences from the sequence set according to system configuration information, and letting the obtained X sequences as X sequences to be used,
where X is a positive integer.

Where the system configuration information may be fixed configuration information, static configuration information, semi-static configuration information and/or dynamic configuration information, and may include sequence index information, and sequence set information and/or sequence cyclic shift information.

Optionally, the step in which a first symbol is processed by using the sequence to be used so as to generate a second symbol includes:
spreading the first symbol by using the sequence to be used so as to generate a second symbol.

Where the first symbol may include one or more symbols. Assuming that the first symbol includes q symbols, the q symbols are spread by using a sequence having a length of L to generate L*q symbols. Specifically, the sequence having the length of L includes L elements. Each symbol of the q symbols are spread by using the sequence having the length of L, that is, each element of the sequence having the length of L is multiplied by the symbol to generate L symbols, thereby generating the L*q symbols.

Optionally, the first symbol includes at least one of: a symbol generated by performing encoding and modulation on data bits to be transmitted, a pilot symbol or a reference signal.

Optionally, the data bits to be transmitted includes at least one of: traffic data information, identification information, information of the sequence to be used and information of the sequence set.

Optionally, the method further includes: transmitting the second symbol.

Optionally, the step in which the second symbol is transmitted includes: generating a signal by the second symbol on a transmission resource, and transmitting the signal.

The transmission resource is designated by a system, or randomly selected from a transmission resource set designated by the system.

Optionally, the step in which the second symbol is transmitted includes at least one of: transmitting, by a terminal side device, the second symbol, and transmitting, by a base station side device, the second symbol.

For the data generation method described above, the present invention will further discuss the following aspects in detail.
(1) The N sequences may be N orthogonal and/or non-orthogonal sequences, which includes following cases: the N sequences are all orthogonal sequences; the N sequences are all non-orthogonal sequences; and some of the N sequences are orthogonal sequences, and some of the N sequences are non-orthogonal sequences.
(2) The N sequences may be N real and/or complex sequences, which includes following cases: the N sequences are all real sequences; the N sequences are all complex sequences; and one part of the N sequences are real sequences, and the other part of the N sequences are complex sequences.
   Elements of the real sequences are all real numbers, and elements of the complex sequences are all complex numbers in a board sense. That is, the complex number in a board sense may be: a complex number with its real part and imaginary part not being equal to zero, a complex number with its imaginary part being equal to zero (i.e. a real number), a complex number with its real part being equal to zero (i.e. a pure imaginary number), or a complex number with its real part and imaginary part being equal to zero (i.e. zero).
(3) When the N sequences include sequences whose elements each have an amplitude equaling to M and a phase coming from a third real number set, a value of M may be 0, and the value of the phase may be any value from the third real number set, or 0, or may not take a value.
(4) The energy of the sequence to be used may be further adjusted or normalized, so that the energy of each element of the sequence is 1, or the total energy of the sequence is 1, or the total energy of the sequence is equal to the sequence length L. Or, the energy of each sequence in the sequence set may be further adjusted or normalized, so that the energy of each element of each sequence in the sequence set is 1, or the total energy of each sequence is 1, or the total energy of each sequence is equal to the sequence length L, or the total energy of the sequences in the sequence set are the same. The operation of adjusting or normalizing the energy may be performed on the sequences in the sequence set or on the sequence to be used, or may be performed besides processing the first symbol by using the sequence to be used.
(5) The identification information includes a terminal serial number, a terminal identification code, a terminal network address, a terminal position information, or information of the base station side device similar as that of the terminal.
(6) The information of the sequence to be used includes index information of the sequence, index information of the elements of the sequence, index information of the real part and the imaginary part of the elements of the sequence, index information of the phase of the elements of the sequence, and cyclic shift information of the sequence.
(7) The information of the sequence set includes index information of the sequence set.
(8) The transmission resource includes at least one of: a carrier, a time slot, a time and frequency domain resource, a space domain resource, a code domain resource, a frequency hopping mode, or an antenna port, and may be defined as or in the form of a resource unit, a resource block, a resource set, or a resource pattern.

### Application example 1

In this example, the data generation method provided by the present invention adopts a sequence set shown in Table 1-1. The sequence set includes 16 sequences (sequence indexes are 0 to 15) having a length of 4, that is, each of the 16 sequences includes four sequence elements.

**Table 1-1**

| sequence index | sequence elements | | | |
|---|---|---|---|---|
| 0 | 1+1i | 1+1i | 1+1i | -1-1i |
| 1 | 1+1i | 1+1i | -1+1i | -1+1i |
| 2 | 1+1i | 1+1i | -1-1i | 1+1i |
| 3 | 1+1i | 1+1i | 1-1i | 1-1i |
| 4 | 1+1i | -1+1i | 1+1i | -1+1i |
| 5 | 1+1i | -1+1i | -1+1i | 1+1i |
| 6 | 1+1i | -1+1i | -1-1i | 1-1i |
| 7 | 1+1i | -1+1i | 1-1i | -1-1i |
| 8 | 1+1i | -1-1i | 1+1i | 1+1i |
| 9 | 1+1i | -1-1i | -1+1i | 1-1i |
| 10 | 1+1i | -1-1i | -1-1i | -1-1i |
| 11 | 1+1i | -1-1i | 1-1i | -1+1i |
| 12 | 1+1i | 1-1i | 1+1i | 1-1i |
| 13 | 1+1i | 1-1i | -1+1i | -1-1i |
| 14 | 1+1i | 1-1i | -1-1i | -1+1i |
| 15 | 1+1i | 1-1i | 1-1i | 1+1i |

In this sequence set, the absolute value of cross-correlation between any two sequences, after energy of each of any two sequences is normalized, is not greater than 0.5. Specifically, for example, when the cross-correlation between a sequence *s*₀ whose sequence index is 0 and a sequence *s*₁ whose sequence index is 1 needs to be calculated, the energy of the two sequence may first be normalized respectively to make the total energy of each of the two sequences be 1, and after that, the cross-correlation between the two sequences may be calculated.

The elements of each sequence in this sequence set have four values: 1+li, -1+1i, -1-1i and 1-li. That is, the value of the real part and the imaginary part of each sequence element comes from a set {-1, 1}, which may also be described as: the value of the each sequence element comes from a complex number set {1+1i, -1+1i, -1-1i, 1-1i}.

The energy of each sequence in this sequence set may be further normalized by multiplying each element by an energy normalization factor 1/sqrt(2) (or sqrt(2)/2), so that the energy of each element of each sequence in the sequence set is 1. At this point, the elements of each sequence in the sequence set have four values: (1+li)/sqrt(2), (-1+1i)/sqrt(2), (-1-1i)/sqrt(2) and (1-li)/sqrt(2). That is, the value of the real part and the imaginary part of the each sequence element comes from a set {-l/sqrt(2), 1/sqrt(2)}, which may also be described as: the value of each sequence element comes from a complex number set {(1+1i)/sqrt(2), (-1+1i)/sqrt(2), (-1-li)/sqrt(2), (1-li)/sqrt(2)}. Or, each element of each sequence is multiplied by an energy normalization factor sqrt(2)/4, so that the total energy of each sequence in the sequence set is 1. At this point, the value of the real part and the imaginary part of the each sequence element comes from a set {-sqrt(2)/4, sqrt(2)/4}. It is to be noted that the sequence set shown in Table 1-1 is not the unique sequence set, and on the basis of above the description, other similar sequence sets may be obtained according to the value set of the real part and the imaginary part of each sequence element or the sequence element set, which will not be described herein.

In this example, each of K transmitters randomly selects a respective one sequence from the sequence set shown in Table 1-1, and uses the selected respective one sequence as the sequence to be used. Each of the K transmitters respectively spreads a symbol to be transmitted by using the respective sequence to be used so as to generate a spread symbol. Each of the K transmitters respectively generates a signal on the transmission resource for the generated symbol, and transmits the respective signal. K is an integer greater than or equal to 1. Each of the K transmitters may be, for example, a terminal device.

In this example, each of the K transmitters may randomly select respective X sequences from the sequence set shown in Table 1-1, and uses the respective selected X sequences as sequences to be used. Each of the K transmitters respectively spreads X symbol streams to be transmitted by using the respective X sequences to be used so as to generate X spread symbol streams. Each of the K transmitters respectively generates a signal on the transmission resource for the X generated symbol streams, and transmits the respective signal. X is an integer greater than or equal to 1.

In the sequence set adopted in this example, the cross-correlation between sequences is low. However, since the number of sequences is small, the collision probability of the access devices may be reduced to a certain extent, and detection complexity of the receiver may be reduced. The short length of the sequences is beneficial to ensure the transmission efficiency. This sequence set may be used for implementing the contention-based or scheduling-free access.

### Application example 2

In this example, the data generation method provided by the present invention adopts a sequence set shown in Table 2-1. The sequence set includes 20 sequences having a length of 4.

**Table 2-1**

| sequence index | sequence elements | | | |
|---|---|---|---|---|
| 0 | (1+0i)*2 | 0 | 0 | 0 |
| 1 | 0 | (1+0i)*2 | 0 | 0 |
| 2 | 0 | 0 | (1+0i)*2 | 0 |
| 3 | 0 | 0 | 0 | (1+0i)*2 |
| 4 | 1+0i | 1+0i | 1+0i | -1+0i |
| 5 | 1+0i | 1+0i | 0+1i | 0+1i |
| 6 | 1+0i | 1+0i | -1+0i | 1+0i |
| 7 | 1+0i | 1+0i | 0-1i | 0-1i |
| 8 | 1+0i | 0+1i | 1+0i | 0+1i |
| 9 | 1+0i | 0+1i | 0+1i | 1+0i |
| 10 | 1+0i | 0+1i | -1+0i | 0-1i |
| 11 | 1+0i | 0+1i | 0-1i | -1+0i |
| 12 | 1+0i | -1+0i | 1+0i | 1+0i |
| 13 | 1+0i | -1+0i | 0+1i | 0-1i |
| 14 | 1+0i | -1+0i | -1+0i | -1+0i |
| 15 | 1+0i | -1+0i | 0-1i | 0+1i |
| 16 | 1+0i | 0-1i | 1+0i | 0-1i |
| 17 | 1+0i | 0-1i | 0+1i | -1+0i |
| 18 | 1+0i | 0-1i | -1+0i | 0+1i |
| 19 | 1+0i | 0-1i | 0-1i | 1+0i |

In this sequence set, the absolute value of cross-correlation between any two sequences, after energy of each of any two sequences is normalized, is not greater than 0.5.

In this sequence set, a factor 2 in first four sequences, that is four sequences whose sequence index respectively is 0, 1, 2 and 3, is an energy adjustment factor, so that the total energy of each sequence in this sequence set is equal.

Without considering the energy adjustment factor, the four sequences of the sequence index 0 to 3 constitute a unit matrix.

Without considering the energy adjustment factor, the elements of each sequence in this sequence set have five values: 1+0i, 0+1i, -1+0i, 0-1i and 0, including real numbers 1, -1 and 0 and pure imaginary numbers 1i and -1i. That is, the value of the real part and the imaginary part of each sequence element comes from a set {-1, 0, -1}, which may also be described as: the value of each sequence element comes from a complex number set { 1+0i, 0+1i, -1+0i, 0-1i, 0}.

The energy of the sequences in this sequence set may be further normalized by multiplying each sequence element by an energy normalization factor 1/2, so that the total energy of each sequence in the sequence set is 1.

It is to be noted that the sequence set shown in Table 2-1 is not the unique sequence set, and on the basis of above the description, other similar sequence sets may be obtained according to the value set of the real part and the imaginary part of each sequence element or the sequence element set, which will not be described herein.

The sequence set shown in Table 1-1 in the application example 1 may also combine with unit matrix sequences (with additionally considering the energy adjustment) to constitute a sequence set including 20 sequences having a length of 4. In the constituted sequence set, the absolute value of cross-correlation between any two sequences, after energy of each of any two sequences is normalized, is not greater than 0.5.

For first four sequences in this sequence set, only one element in each sequence is a nonzero element, and the other elements are zero elements. Since a lot of zero elements exist, in the actual data transmission process, the effect of transmission diversity may be lost, thereby affecting the transmission performance.

Therefore, the data generation method provided by the present invention further adopts a sequence set shown in Table 2-2. The sequence set includes 16 sequences including no zero elements. That is, the sequence set removes the first four sequences including zero elements of the sequence set shown in Table 2-1.

**Table 2-2**

| sequence index | sequence elements | | | |
|---|---|---|---|---|
| 0 | 1+0i | 1+0i | 1+0i | -1+0i |
| 1 | 1+0i | 1+0i | 0+1i | 0+1i |
| 2 | 1+0i | 1+0i | -1+0i | 1+0i |
| 3 | 1+0i | 1+0i | 0-1i | 0-1i |
| 4 | 1+0i | 0+1i | 1+0i | 0+1i |
| 5 | 1+0i | 0+1i | 0+1i | 1+0i |
| 6 | 1+0i | 0+1i | -1+0i | 0-1i |
| 7 | 1+0i | 0+1i | 0-1i | -1+0i |
| 8 | 1+0i | -1+0i | 1+0i | 1+0i |
| 9 | 1+0i | -1+0i | 0+1i | 0-1i |
| 10 | 1+0i | -1+0i | -1+0i | -1+0i |
| 11 | 1+0i | -1+0i | 0-1i | 0+1i |
| 12 | 1+0i | 0-1i | 1+0i | 0-1i |
| 13 | 1+0i | 0-1i | 0+1i | -1+0i |
| 14 | 1+0i | 0-1i | -1+0i | 0+1i |
| 15 | 1+0i | 0-1i | 0-1i | 1+0i |

In this sequence set, the absolute value of cross-correlation between any two sequences, after energy of each of any two sequences is normalized, is also not greater than 0.5.

The elements of each sequence in this sequence set have four values: 1+0i, 0+1i, -1+0i and 0-1i. That is, the value of the real part and the imaginary part of each sequence element comes from a set {-1, 0, 1}, which may also be described as: the value of each sequence element comes from a complex number set {1+0i, 0+1i, -1+0i, 0-1i}.

The energy of the sequences in this sequence set may be further normalized by multiplying each sequence element by an energy normalization factor 1/2, so that the total energy of each sequence in the sequence set is 1. At this point, the value of the real part and the imaginary part of each sequence element comes from a set {-0.5, 0, 0.5}.

It is to be noted that the sequence set shown in Table 2-2 is not the only one sequence set, and on the basis of above the description, other similar sequence sets may be obtained according to the value set of the real part and the imaginary part of each sequence element or the sequence element set, which will not be described herein.

### Application example 3

In this example, the data generation method provided by the present invention adopts a sequence set shown in Table 3-1. The sequence set includes 13 sequences having a length of 4.

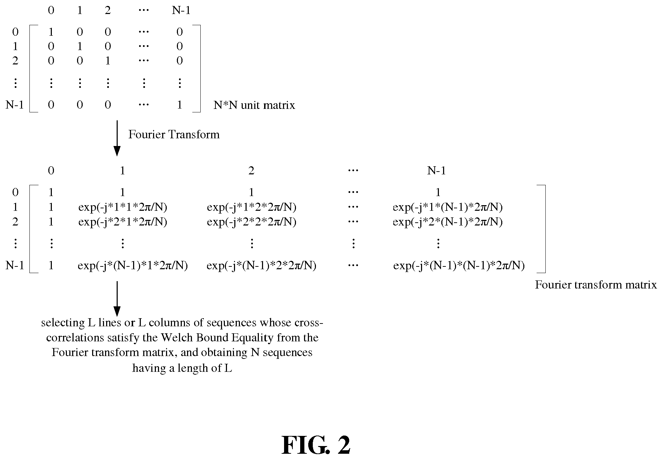

FIG. 2 is a schematic diagram of an obtaining process of a sequence set according to an application example 3 of the present invention. As shown in FIG. 2, sequences in this sequence set are N sequences having a length of L obtained by performing Fourier Transform on a unit matrix N*N, and selecting L lines or L columns of sequences whose cross-correlations satisfy the Welch Bound Equality (WBE) from the Fourier transform matrix. A sequence set in which a maximum cross-correlation (its absolute value) value of the sequences is minimized and a sequence set in which the sum of squares of the cross-correlation value of the sequences is minimized are obtained according to the WBE.

The sequences in this sequence set may be express in the form of M*exp(j*n*k*2π/N), where M is the element amplitude, and -n*k*2π/N is the element phase.

In this example, N is equal to 13, M is equal to 1, n is equal to 0, 1, ..., and 12, and k is equal to 0, 1, 3 and 9. That is, 13 sequences having a length of 4 are obtained by selecting the lines or columns 0, 1, 3 and 9 of sequences from the Fourier transform matrix. The sequence elements are shown in Table 3-1, where when n and/or k are equal to 0, the sequence elements are 1.

**Table 3-1**

| sequence index | sequence elements | | | |
|---|---|---|---|---|
| 0 | 1 | 1 | 1 | 1 |
| 1 | 1 | exp(-j*1*1*2π/13) | exp(-j*1*3*2π/13) | exp(-j*1*9*2π/13) |
| 2 | 1 | exp(-j*2*1*2π/13) | exp(-j*2*3*2π/13) | exp(-j*2*9*2π/13) |
| 3 | 1 | exp(-j*3*1*2π/13) | exp(-j*3*3*2π/13) | exp(-j*3*9*2π/13) |
| 4 | 1 | exp(-j*4*1*2π/13) | exp(-j*4*3*2π/13) | exp(-j*4*9*2π/13) |
| 5 | 1 | exp(-j*5*1*2π/13) | exp(-j*5*3*2π/13) | exp(-j*5*9*2π/13) |
| 6 | 1 | exp(-j*6*1*2π/13) | exp(-j*6*3*2π/13) | exp(-j*6*9*2π/13) |
| 7 | 1 | exp(-j*7*1*2π/13) | exp(-j*7*3*2π/13) | exp(-j*7*9*2π/13) |
| 8 | 1 | exp(-j*8*1*2π/13) | exp(-j*8*3*2π/13) | exp(-j*8*9*2π/13) |
| 9 | 1 | exp(-j*9*1*2π/13) | exp(-j*9*3*2π/13) | exp(-j*9*9*2π/13) |
| 10 | 1 | exp(-j*10*1*2π/13) | exp(-j*10*3*2π/13) | exp(-j*10*9*2π/13) |
| 11 | 1 | exp(-j*11*1*2π/13) | exp(-j*11*3*2π/13) | exp(-j*11*9*2π/13) |
| 12 | 1 | exp(-j*12*1*2π/13) | exp(-j*12*3*2π/13) | exp(-j*12*9*2π/13) |

In this sequence set, the absolute value of cross-correlation between any two sequences, after energy of each of any two sequences is normalized, is equal to sqrt((N-L)/(L*(N-1))), that is sqrt((13-4)/(4*(13-1)))=sqrt(3/16). The square sum of the non-diagonal elements of the cross-correlation matrix of the sequences is equal to N*(N-L)/L, that is 13*(13-4)/4=117/4.

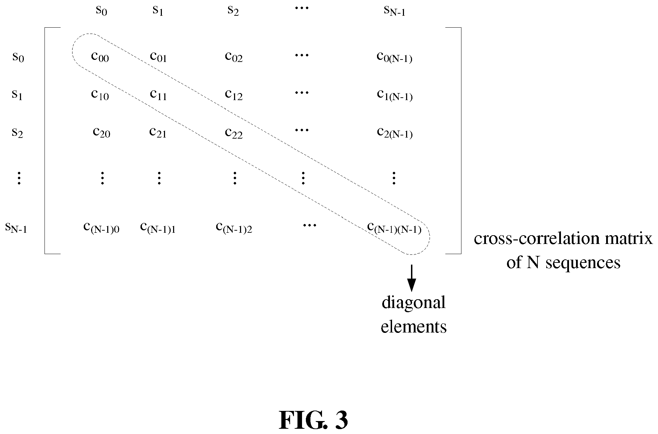

FIG. 3 is a schematic diagram of a cross-correlation matrix of N sequences according to an application example 3 of the present invention. As shown in FIG. 3, c₀₀,..., c_{(N-1)(N-1)} represent elements in the matrix. The elements within the dashed line are diagonal elements, and the remaining elements are non-diagonal elements. The non-diagonal elements may be further classified. The elements at the top right of the diagonal is called upper triangle elements, and the elements at the lower left of the diagonal is lower triangle elements. In the cross-correlation matrix, the upper triangle elements and the lower triangle elements are symmetrical, which represents the cross-correlation between the two sequences. According to the above description, it may also be obtained that, in this example, the sum of the squares of the upper triangle elements of the cross-correlation matrix of the sequences in the sequence set or the sum of the squares of the lower triangle elements of the cross-correlation matrix of the sequences in the sequence set is equal to N*(NL)/(2*L), that is 13*(13-4)/(2*4)=117/8.

Furthermore, the above sequences may be expressed as M*exp(-j*n*k*2π/N) = 1*exp(-j*n*k*2π/13) = exp(-j*P(n)*2π/13), where P(n)=n*k, n=0, 1, ..., 12, and k=0, 1, 3, 9. Therefore, P(n) may be expressed in the form of a set or a table. As shown in Table 3-2, when k and/or n is equal to 0, P(n) is 0.

The sequence to be used may be determined by obtaining a corresponding sequence P(n) from a P(n) set or the table shown in Table 3-2, and combining with a formula exp(-j*P(n)*2π/13).

**Table 3-2**

| sequence index | P(n) | | | |
|---|---|---|---|---|
| 0 | 0 | 0 | 0 | 0 |
| 1 | 0 | 1*1 | 1*3 | 1*9 |
| 2 | 0 | 2*1 | 2*3 | 2*9 |
| 3 | 0 | 3*1 | 3*3 | 3*9 |
| 4 | 0 | 4*1 | 4*3 | 4*9 |
| 5 | 0 | 5*1 | 5*3 | 5*9 |
| 6 | 0 | 6*1 | 6*3 | 6*9 |
| 7 | 0 | 7*1 | 7*3 | 7*9 |
| 8 | 0 | 8*1 | 8*3 | 8*9 |
| 9 | 0 | 9*1 | 9*3 | 9*9 |
| 10 | 0 | 10*1 | 10*3 | 10*9 |
| 11 | 0 | 11*1 | 11*3 | 11*9 |
| 12 | 0 | 12*1 | 12*3 | 12*9 |

Furthermore, since n=0, 1, ..., 12, n may be rendered as indexes of the sequences in the sequence set.

The sequence to be used may be determined by determining an index n of the sequence to be used, and combining with a formula exp(-j*n*k*2π/13), where k=0, 1, 3, 9.

### Application example 4

In this example, the data generation method provided by the present invention adopts a sequence set including 16 sequences having a length of 4. The sequences may be expressed in the form of M*exp(j*k*π/4), that is, M is the element amplitude, and k*π/4 is the element phase.

In this example, the element amplitude M is equal to 1, the value of the element phase is taken from a set {-3, -1, 1, 3 }*π/4, that is, the value of k includes -3, -1, 1 and 3. The value of k of each sequence is shown in Table 4-1.

**Table 4-1**

| sequence index | k | | | |
|---|---|---|---|---|
| 0 | 1 | 1 | 1 | -3 |
| 1 | 1 | 1 | 3 | 3 |
| 2 | 1 | 1 | -3 | 1 |
| 3 | 1 | 1 | -1 | -1 |
| 4 | 1 | 3 | 1 | 3 |
| 5 | 1 | 3 | 3 | 1 |
| 6 | 1 | 3 | -3 | -1 |
| 7 | 1 | 3 | -1 | -3 |
| 8 | 1 | -3 | 1 | 1 |
| 9 | 1 | -3 | 3 | -1 |
| 10 | 1 | -3 | -3 | -3 |
| 11 | 1 | -3 | -1 | 3 |
| 12 | 1 | -1 | 1 | -1 |
| 13 | 1 | -1 | 3 | -3 |
| 14 | 1 | -1 | -3 | 3 |
| 15 | 1 | -1 | -1 | 1 |

The sequence to be used may be determined by obtaining the value of k of a corresponding sequence from a value set of k or the table shown in Table 4-1, and combining with a formula exp(j*k*π/4).

The sequence set in this example is equivalent to the sequence set shown in the application example 1.

Similarly, the energy of the sequences or the sequence set in this example may be further adjusted or normalized.

Similarly, the sequence set in this example is not the unique sequence set, and on the basis of above the description, other similar sequence sets may be obtained according to the values of the amplitude and the phase of each sequence element, which will not be described herein.

### Application example 5

In this example, the data generation method provided by the present invention adopts a sequence set including 16 sequences having a length of 4. The sequences may be expressed in the form of M*exp(j*k*π/2), that is, M is the element amplitude, and k*π/2 is the element phase.

In this example, the element amplitude M is equal to 1, the value of the element phase is taken from a set {0, 1, 2, 3}*π/2, that is, the value of k includes 0, 1, 2 and 3. The value of k of each sequence is shown in Table 5-1.

**Table 5-1**

| sequence index | k | | | |
|---|---|---|---|---|
| 0 | 0 | 0 | 0 | 2 |
| 1 | 0 | 0 | 1 | 1 |
| 2 | 0 | 0 | 2 | 0 |
| 3 | 0 | 0 | 3 | 3 |
| 4 | 0 | 1 | 0 | 1 |
| 5 | 0 | 1 | 1 | 0 |
| 6 | 0 | 1 | 2 | 3 |
| 7 | 0 | 1 | 3 | 2 |
| 8 | 0 | 2 | 0 | 0 |
| 9 | 0 | 2 | 1 | 3 |
| 10 | 0 | 2 | 2 | 2 |
| 11 | 0 | 2 | 3 | 1 |
| 12 | 0 | 3 | 0 | 3 |
| 13 | 0 | 3 | 1 | 2 |
| 14 | 0 | 3 | 2 | 1 |
| 15 | 0 | 3 | 3 | 0 |

The sequence to be used may be determined by obtaining the value of k of a corresponding sequence from a value set of k or the table shown in Table 5-1, and combining with a formula exp(j*k*π/2).

The sequence set in this example is equivalent to the sequence set of the Table 2-2 shown in the application example 2.

Similarly, the energy of the sequences or the sequence set in this example may be further adjusted or normalized.

Similarly, the sequence set in this example is not the only one sequence set, and on the basis of above the description, other similar sequence sets may be obtained according to the values of the amplitude and the phase of each sequence element, which will not be described herein.

### Application example 6

In this example, the data generation method provided by the present invention adopts a sequence set shown in Table 6-1. The sequence set includes 32 sequences having a length of 4.

**Table 6-1**

| sequence index | sequence elements | | | |
|---|---|---|---|---|
| 0 | 1+1i | 1+1i | 1+1i | 1+1i |
| 1 | 1+1i | 1+1i | 1+1i | -1-1i |
| 2 | 1+1i | 1+1i | -1-1i | 1+1i |
| 3 | 1+1i | 1+1i | -1-1i | -1-1i |
| 4 | 1+1i | 1+1i | -1+1i | -1+1i |
| 5 | 1+1i | 1+1i | -1+1i | 1-1i |
| 6 | 1+1i | 1+1i | 1-1i | -1+1i |
| 7 | 1+1i | 1+1i | 1-1i | 1-1i |
| 8 | 1+1i | -1+1i | 1+1i | -1+1i |
| 9 | 1+1i | -1+1i | 1+1i | 1-1i |
| 10 | 1+1i | -1+1i | -1-1i | -1+1i |
| 11 | 1+1i | -1+1i | -1-1i | 1-1i |
| 12 | 1+1i | -1+1i | -1+1i | 1+1i |
| 13 | 1+1i | -1+1i | -1+1i | -1-1i |
| 14 | 1+1i | -1+1i | 1-1i | 1+1i |
| 15 | 1+1i | -1+1i | 1-1i | -1-1i |
| 16 | 1+1i | -1-1i | 1+1i | 1+1i |
| 17 | 1+1i | -1-1i | 1+1i | -1-1i |
| 18 | 1+1i | -1-1i | -1-1i | 1+1i |
| 19 | 1+1i | -1-1i | -1-1i | -1-1i |
| 20 | 1+1i | -1-1i | -1+1i | -1+1i |
| 21 | 1+1i | -1-1i | -1+1i | 1-1i |
| 22 | 1+1i | -1-1i | 1-1i | -1+1i |
| 23 | 1+1i | -1-1i | 1-1i | 1-1i |
| 24 | 1+1i | 1-1i | 1+1i | -1+1i |
| 25 | 1+1i | 1-1i | 1+1i | 1-1i |
| 26 | 1+1i | 1-1i | -1-1i | -1+1i |
| 27 | 1+1i | 1-1i | -1-1i | 1-1i |
| 28 | 1+1i | 1-1i | -1+1i | 1+1i |
| 29 | 1+1i | 1-1i | -1+1i | -1-1i |
| 30 | 1+1i | 1-1i | 1-1i | 1+1i |
| 31 | 1+1i | 1-1i | 1-1i | -1-1i |

In this sequence set, the absolute value of cross-correlation between any two sequences, after energy of each of any two sequences is normalized, is not greater than sqrt(2)/2.

The elements of each sequence in this sequence set have four values: 1+li, -1+1i, -1-li and 1-li. That is, the value of the real part and the imaginary part of each sequence element comes from a set {-1, 1}, which may also be described as: the value of each sequence element comes from a complex number set {1+1i, -1+1i, -1-1i, 1-1i}.

The energy of the sequences in this sequence set may be further normalized by multiplying each sequence element by an energy normalization factor 1/sqrt(2), so that the energy of each element of each sequence in the sequence set is 1. At this point, the value of the real part and the imaginary part of each sequence element comes from a set {-1/sqrt(2), 1/sqrt(2)}.

In another example, each element of each sequence is multiplied by an energy normalization factor sqrt(2)/4, so that the total energy of each sequence in the sequence set is 1. At this point, the value of the real part and the imaginary part of the each sequence element comes from a set {-sqrt(2)/4, sqrt(2)/4}.

It is to be noted that the sequence set shown in Table 6-1 is not the unique sequence set, and on the basis of above the description, other similar sequence sets may be obtained according to the value set of the real part and the imaginary part of each sequence element or the sequence element set, which will not be described herein.

In addition, the sequence set adopted in this example may also combine with sequences in the unit matrix (with considering the energy adjustment additionally) to constitute a sequence set including 36 sequences having a length of 4. In the constituted sequence set, the absolute value of cross-correlation between any two sequences, after energy of each of any two sequences is normalized, is not greater than sqrt(2)/2.

In the sequence set adopted in this example, the number of sequences is large, and the cross-correlation between sequences is high. However, the receiver utilizes the interference cancellation multi-user detection technology, ensuring the performance of shared access and data transmission of multiple users on the same transmission resource. Therefore, collision probability of the access devices may be well controlled, and the detection complexity of the receiver may be in a low level. This sequence set may be used for implementing the contention-based or scheduling-free access.

### Application example 7

In this example, the data generation method provided by the present invention adopts a sequence set shown in Table 7-1. The sequence set includes 64 sequences having a length of 4.

**Table 7-1**

| sequence index | sequence elements | | | |
|---|---|---|---|---|
| 0 | 1+1i | 1+1i | 1+1i | 1+1i |
| 1 | 1+1i | 1+1i | 1+1i | -1+1i |
| 2 | 1+1i | 1+1i | 1+1i | -1-1i |
| 3 | 1+1i | 1+1i | 1+1i | 1-1i |
| 4 | 1+1i | 1+1i | -1+1i | 1+1i |
| 5 | 1+1i | 1+1i | -1+1i | -1+1i |
| 6 | 1+1i | 1+1i | -1+1i | -1-1i |
| 7 | 1+1i | 1+1i | -1+1i | 1-1i |
| 8 | 1+1i | 1+1i | -1-1i | 1+1i |
| 9 | 1+1i | 1+1i | -1-1i | -1+1i |
| 10 | 1+1i | 1+1i | -1-1i | -1-1i |
| 11 | 1+1i | 1+1i | -1-1i | 1-1i |
| 12 | 1+1i | 1+1i | 1-1i | 1+1i |
| 13 | 1+1i | 1+1i | 1-1i | -1+1i |
| 14 | 1+1i | 1+1i | 1-1i | -1-1i |
| 15 | 1+1i | 1+1i | 1-1i | 1-1i |
| 16 | 1+1i | -1+1i | 1+1i | 1+1i |
| 17 | 1+1i | -1+1i | 1+1i | -1+1i |
| 18 | 1+1i | -1+1i | 1+1i | -1-1i |
| 19 | 1+1i | -1+1i | 1+1i | 1-1i |
| 20 | 1+1i | -1+1i | -1+1i | 1+1i |
| 21 | 1+1i | -1+1i | -1+1i | -1+1i |
| 22 | 1+1i | -1+1i | -1+1i | -1-1i |
| 23 | 1+1i | -1+1i | -1+1i | 1-1i |
| 24 | 1+1i | -1+1i | -1-1i | 1+1i |
| 25 | 1+1i | -1+1i | -1-1i | -1+1i |
| 26 | 1+1i | -1+1i | -1-1i | -1-1i |
| 27 | 1+1i | -1+1i | -1-1i | 1-1i |
| 28 | 1+1i | -1+1i | 1-1i | 1+1i |
| 29 | 1+1i | -1+1i | 1-1i | -1+1i |
| 30 | 1+1i | -1+1i | 1-1i | -1-1i |
| 31 | 1+1i | -1+1i | 1-1i | 1-1i |
| 32 | 1+1i | -1-1i | 1+1i | 1+1i |
| 33 | 1+1i | -1-1i | 1+1i | -1+1i |
| 34 | 1+1i | -1-1i | 1+1i | -1-1i |
| 35 | 1+1i | -1-1i | 1+1i | 1-1i |
| 36 | 1+1i | -1-1i | -1+1i | 1+1i |
| 37 | 1+1i | -1-1i | -1+1i | -1+1i |
| 38 | 1+1i | -1-1i | -1+1i | -1-1i |
| 39 | 1+1i | -1-1i | -1+1i | 1-1i |
| 40 | 1+1i | -1-1i | -1-1i | 1+1i |
| 41 | 1+1i | -1-1i | -1-1i | -1+1i |
| 42 | 1+1i | -1-1i | -1-1i | -1-1i |
| 43 | 1+1i | -1-1i | -1-1i | 1-1i |
| 44 | 1+1i | -1-1i | 1-1i | 1+1i |
| 45 | 1+1i | -1-1i | 1-1i | -1+1i |
| 46 | 1+1i | -1-1i | 1-1i | -1-1i |
| 47 | 1+1i | -1-1i | 1-1i | 1-1i |
| 48 | 1+1i | 1-1i | 1+1i | 1+1i |
| 49 | 1+1i | 1-1i | 1+1i | -1+1i |
| 50 | 1+1i | 1-1i | 1+1i | -1-1i |
| 51 | 1+1i | 1-1i | 1+1i | 1-1i |
| 52 | 1+1i | 1-1i | -1+1i | 1+1i |
| 53 | 1+1i | 1-1i | -1+1i | -1+1i |
| 54 | 1+1i | 1-1i | -1+1i | -1-1i |
| 55 | 1+1i | 1-1i | -1+1i | 1-1i |
| 56 | 1+1i | 1-1i | -1-1i | 1+1i |
| 57 | 1+1i | 1-1i | -1-1i | -1+1i |
| 58 | 1+1i | 1-1i | -1-1i | -1-1i |
| 59 | 1+1i | 1-1i | -1-1i | 1-1i |
| 60 | 1+1i | 1-1i | 1-1i | 1+1i |
| 61 | 1+1i | 1-1i | 1-1i | -1+1i |
| 62 | 1+1i | 1-1i | 1-1i | -1-1i |
| 63 | 1+1i | 1-1i | 1-1i | 1-1i |

The value of the real part and the imaginary part of each sequence in this sequence set comes from a set {-1, 1}, and the sequence elements have four values: 1+li, -1+li, -1-li and 1-li.

In the sequence set in this example, the first element of each sequence is fixed as 1+1i, and other three elements may be any one of the four values described above. Therefore, the number of sequences in the sequence set is 1*4*4*4=64.

In this sequence set, the absolute value of cross-correlation between any two sequences, after energy of each of any two sequences is normalized, is not greater than 0.8.

The energy of the sequences in this sequence set may be further normalized by multiplying each sequence element by an energy normalization factor 1/sqrt(2), so that the energy of each element of each sequence in the sequence set is 1. At this point, the value of the real part and the imaginary part of each sequence element comes from a set {-1/sqrt(2), 1/sqrt(2)}.

In another example, each element of each sequence is multiplied by an energy normalization factor sqrt(2)/4, so that the total energy of each sequence in the sequence set is 1. At this point, the value of the real part and the imaginary part of the each sequence element comes from a set {-sqrt(2)/4, sqrt(2)/4}.

It is to be noted that the sequence set shown in this example is not the only one sequence set, and on the basis of above the description, other similar sequence sets may be obtained according to the value set of the real part and the imaginary part of each sequence element or the sequence element set, which will not be described herein.

In addition, the sequence set adopted in this example may also combine with sequences in the unit matrix (with considering the energy adjustment additionally) to constitute a sequence set including 68 sequences having a length of 4. In the constituted sequence set, the absolute value of cross-correlation between any two sequences, after energy of each of any two sequences is normalized, is not greater than 0.8.

In the sequence set adopted in this example, the number of sequences is large, and the cross-correlation between sequences is high. However, the receiver utilizes the interference cancellation multi-user detection technology, ensuring the performance of shared access and data transmission of multiple users on the same transmission resource. Therefore, collision probability of the access devices may be well controlled, and the detection complexity of the receiver may be in an appropriate level. This sequence set may be used for implementing the contention-based or scheduling-free access.

### Application example 8

In this example, the data generation method provided by the present invention adopts a sequence set including 156 sequences having a length of 4.

Without considering the energy adjustment or the energy normalization, the value of the real part and the imaginary part of the each sequence in this sequence set comes from a set {-1, 0, 1}. The sequence elements have nine values: 0, 1, 1+li, 1i, -1+1i, -1, -1-1i, -1i and 1-li.

The sequences having a length of 4 are adopted, and each element of each sequence may be any one of the nine values, which may obtain 9*9*9*9=6561 sequences. 6561-1=6560 sequences may be obtained by removing one sequence whose elements are all 0.

Furthermore, the energy of the sequences may be adjusted to make the total energy of each sequence to be equal. For example, the total energy of each sequence is 1 or 4.

A cross-correlation threshold between the sequences is controlled to be not greater than 0.8. That is, the absolute value of cross-correlation between the sequences, after energy of each sequence is normalized, is not greater than 0.8. 156 sequences may be searched by computer search. The sequence set is shown in Table 8-1.

**Table 8-1**

| sequence index | sequence elements | | | |
|---|---|---|---|---|
| 0 | 1+0i | 0+0i | 0+0i | 0+0i |
| 1 | 0+0i | 1+0i | 0+0i | 0+0i |
| 2 | 1+0i | 1+0i | 0+0i | 0+0i |
| 3 | 0+1i | 1+0i | 0+0i | 0+0i |
| 4 | -1+0i | 1+0i | 0+0i | 0+0i |
| 5 | 0-1i | 1+0i | 0+0i | 0+0i |
| 6 | 0+0i | 0+0i | 1+0i | 0+0i |
| 7 | 1+0i | 0+0i | 1+0i | 0+0i |
| 8 | 0+1i | 0+0i | 1+0i | 0+0i |
| 9 | -1+0i | 0+0i | 1+0i | 0+0i |
| 10 | 0-1i | 0+0i | 1+0i | 0+0i |
| 11 | 0+0i | 1+0i | 1+0i | 0+0i |
| 12 | 1+1i | 1+0i | 1+0i | 0+0i |
| 13 | -1+1i | 1+0i | 1+0i | 0+0i |
| 14 | -1-1i | 1+0i | 1+0i | 0+0i |
| 15 | 1-1i | 1+0i | 1+0i | 0+0i |
| 16 | 0+0i | 0+1i | 1+0i | 0+0i |
| 17 | 1+1i | 0+1i | 1+0i | 0+0i |
| 18 | -1+1i | 0+1i | 1+0i | 0+0i |
| 19 | -1-1i | 0+1i | 1+0i | 0+0i |
| 20 | 1-1i | 0+1i | 1+0i | 0+0i |
| 21 | 0+0i | -1+0i | 1+0i | 0+0i |
| 22 | 1+1i | -1+0i | 1+0i | 0+0i |
| 23 | -1+1i | -1+0i | 1+0i | 0+0i |
| 24 | -1-1i | -1+0i | 1+0i | 0+0i |
| 25 | 1-1i | -1+0i | 1+0i | 0+0i |
| 26 | 0+0i | 0-1i | 1+0i | 0+0i |
| 27 | 1+1i | 0-1i | 1+0i | 0+0i |
| 28 | -1+1i | 0-1i | 1+0i | 0+0i |
| 29 | -1-1i | 0-1i | 1+0i | 0+0i |
| 30 | 1-1i | 0-1i | 1+0i | 0+0i |
| 31 | 0+0i | 0+0i | 0+0i | 1+0i |
| 32 | 1+0i | 0+0i | 0+0i | 1+0i |
| 33 | 0+1i | 0+0i | 0+0i | 1+0i |
| 34 | -1+0i | 0+0i | 0+0i | 1+0i |
| 35 | 0-1i | 0+0i | 0+0i | 1+0i |
| 36 | 0+0i | 1+0i | 0+0i | 1+0i |
| 37 | 1+1i | 1+0i | 0+0i | 1+0i |
| 38 | -1+1i | 1+0i | 0+0i | 1+0i |
| 39 | -1-1i | 1+0i | 0+0i | 1+0i |
| 40 | 1-1i | 1+0i | 0+0i | 1+0i |
| 41 | 0+0i | 0+1i | 0+0i | 1+0i |
| 42 | 1+1i | 0+1i | 0+0i | 1+0i |
| 43 | -1+1i | 0+1i | 0+0i | 1+0i |
| 44 | -1-1i | 0+1i | 0+0i | 1+0i |
| 45 | 1-1i | 0+1i | 0+0i | 1+0i |
| 46 | 0+0i | -1+0i | 0+0i | 1+0i |
| 47 | 1+1i | -1+0i | 0+0i | 1+0i |
| 48 | -1+1i | -1+0i | 0+0i | 1+0i |
| 49 | -1-1i | -1+0i | 0+0i | 1+0i |
| 50 | 1-1i | -1+0i | 0+0i | 1+0i |
| 51 | 0+0i | 0-1i | 0+0i | 1+0i |
| 52 | 1+1i | 0-1i | 0+0i | 1+0i |
| 53 | -1+1i | 0-1i | 0+0i | 1+0i |
| 54 | -1-1i | 0-1i | 0+0i | 1+0i |
| 55 | 1-1i | 0-1i | 0+0i | 1+0i |
| 56 | 0+0i | 0+0i | 1+0i | 1+0i |
| 57 | 1+1i | 0+0i | 1+0i | 1+0i |
| 58 | -1+1i | 0+0i | 1+0i | 1+0i |
| 59 | -1-1i | 0+0i | 1+0i | 1+0i |
| 60 | 1-1i | 0+0i | 1+0i | 1+0i |
| 61 | 1+0i | 1+0i | 1+0i | 1+0i |
| 62 | 0+1i | 1+0i | 1+0i | 1+0i |
| 63 | -1+0i | 1+0i | 1+0i | 1+0i |
| 64 | 0-1i | 1+0i | 1+0i | 1+0i |
| 65 | 0+0i | 1+0i | 1+0i | 1+0i |
| 66 | 1+0i | 0+1i | 1+0i | 1+0i |
| 67 | 0+1i | 0+1i | 1+0i | 1+0i |
| 68 | -1+0i | 0+1i | 1+0i | 1+0i |
| 69 | 0-1i | 0+1i | 1+0i | 1+0i |
| 70 | 0+0i | -1+1i | 1+0i | 1+0i |
| 71 | 1+0i | -1+1i | 1+0i | 1+0i |
| 72 | 0+1i | -1+1i | 1+0i | 1+0i |
| 73 | -1+0i | -1+1i | 1+0i | 1+0i |
| 74 | 0-1i | -1+1i | 1+0i | 1+0i |
| 75 | 0+0i | -1-1i | 1+0i | 1+0i |
| 76 | 1+0i | 0-1i | 1+0i | 1+0i |
| 77 | 0+1i | 0-1i | 1+0i | 1+0i |
| 78 | -1+0i | 0-1i | 1+0i | 1+0i |
| 79 | 0-1i | 0-1i | 1+0i | 1+0i |
| 80 | 0+0i | 1-1i | 1+0i | 1+0i |
| 81 | 0+0i | 0+0i | 0+1i | 1+0i |
| 82 | 1+1i | 0+0i | 0+1i | 1+0i |
| 83 | -1+1i | 0+0i | 0+1i | 1+0i |
| 84 | -1-1i | 0+0i | 0+1i | 1+0i |
| 85 | 1-1i | 0+0i | 0+1i | 1+0i |
| 86 | 1+0i | 1+0i | 0+1i | 1+0i |
| 87 | 0+1i | 1+0i | 0+1i | 1+0i |
| 88 | -1+0i | 1+0i | 0+1i | 1+0i |
| 89 | 0-1i | 1+0i | 0+1i | 1+0i |
| 90 | 0+0i | 1+0i | 0+1i | 1+0i |
| 91 | 1+0i | 0+1i | 0+1i | 1+0i |
| 92 | 0+1i | 0+1i | 0+1i | 1+0i |
| 93 | -1+0i | 0+1i | 0+1i | 1+0i |
| 94 | 0-1i | 0+1i | 0+1i | 1+0i |
| 95 | 0+0i | -1+1i | 0+1i | 1+0i |
| 96 | 1+0i | -1+0i | 0+1i | 1+0i |
| 97 | 0+1i | -1+0i | 0+1i | 1+0i |
| 98 | -1+0i | -1+0i | 0+1i | 1+0i |
| 99 | 0-1i | -1+0i | 0+1i | 1+0i |
| 100 | 0+0i | -1-1i | 0+1i | 1+0i |
| 101 | 1+0i | 0-1i | 0+1i | 1+0i |
| 102 | 0+1i | 0-1i | 0+1i | 1+0i |
| 103 | -1+0i | 0-1i | 0+1i | 1+0i |
| 104 | 0-1i | 0-1i | 0+1i | 1+0i |
| 105 | 0+0i | 1-1i | 0+1i | 1+0i |
| 106 | 0+0i | 0+0i | -1+0i | 1+0i |
| 107 | 1+1i | 0+0i | -1+0i | 1+0i |
| 108 | -1+1i | 0+0i | -1+0i | 1+0i |
| 109 | -1-1i | 0+0i | -1+0i | 1+0i |
| 110 | 1-1i | 0+0i | -1+0i | 1+0i |
| 111 | 1+0i | 1+0i | -1+0i | 1+0i |
| 112 | 0+1i | 1+0i | -1+0i | 1+0i |
| 113 | -1+0i | 1+0i | -1+0i | 1+0i |
| 114 | 0-1i | 1+0i | -1+0i | 1+0i |
| 115 | 0+0i | 1+0i | -1+0i | 1+0i |
| 116 | 1+0i | 0+1i | -1+0i | 1+0i |
| 117 | 0+1i | 0+1i | -1+0i | 1+0i |
| 118 | -1+0i | 0+1i | -1+0i | 1+0i |
| 119 | 0-1i | 0+1i | -1+0i | 1+0i |
| 120 | 0+0i | -1+1i | -1+0i | 1+0i |
| 121 | 1+0i | -1+1i | -1+0i | 1+0i |
| 122 | 0+1i | -1+1i | -1+0i | 1+0i |
| 123 | -1+0i | -1+1i | -1+0i | 1+0i |
| 124 | 0-1i | -1+1i | -1+0i | 1+0i |
| 125 | 0+0i | -1-1i | -1+0i | 1+0i |
| 126 | 1+0i | 0-1i | -1+0i | 1+0i |
| 127 | 0+1i | 0-1i | -1+0i | 1+0i |
| 128 | -1+0i | 0-1i | -1+0i | 1+0i |
| 129 | 0-1i | 0-1i | -1+0i | 1+0i |
| 130 | 0+0i | 1-1i | -1+0i | 1+0i |
| 131 | 0+0i | 0+0i | 0-1i | 1+0i |
| 132 | 1+1i | 0+0i | 0-1i | 1+0i |
| 133 | -1+1i | 0+0i | 0-1i | 1+0i |
| 134 | -1-1i | 0+0i | 0-1i | 1+0i |
| 135 | 1-1i | 0+0i | 0-1i | 1+0i |
| 136 | 1+0i | 1+0i | 0-1i | 1+0i |
| 137 | 0+1i | 1+0i | 0-1i | 1+0i |
| 138 | -1+0i | 1+0i | 0-1i | 1+0i |
| 139 | 0-1i | 1+0i | 0-1i | 1+0i |
| 140 | 0+0i | 1+0i | 0-1i | 1+0i |
| 141 | 1+0i | 0+1i | 0-1i | 1+0i |
| 142 | 0+1i | 0+1i | 0-1i | 1+0i |
| 143 | -1+0i | 0+1i | 0-1i | 1+0i |
| 144 | 0-1i | 0+1i | 0-1i | 1+0i |
| 145 | 0+0i | -1+1i | 0-1i | 1+0i |
| 146 | 1+0i | -1+0i | 0-1i | 1+0i |
| 147 | 0+1i | -1+0i | 0-1i | 1+0i |
| 148 | -1+0i | -1+0i | 0-1i | 1+0i |
| 149 | 0-1i | -1+0i | 0-1i | 1+0i |
| 150 | 0+0i | -1-1i | 0-1i | 1+0i |
| 151 | 1+0i | 0-1i | 0-1i | 1+0i |
| 152 | 0+1i | 0-1i | 0-1i | 1+0i |
| 153 | -1+0i | 0-1i | 0-1i | 1+0i |
| 154 | 0-1i | 0-1i | 0-1i | 1+0i |
| 155 | 0+0i | 1-1i | 0-1i | 1+0i |

That is, the sequence set adopted in this example includes 156 sequences having a length of 4. The absolute value of cross-correlation between any two sequences, after energy of each of any two sequences is normalized, is not greater than 0.8.

It is to be noted that the sequence set shown in this example is not the unique sequence set, and on the basis of above the description, other similar sequence sets may be obtained according to the value set of the real part and the imaginary part of each sequence element or the sequence element set, which will not be described herein.

In addition, four sequences in the sequence set adopted in this example constitute a unit matrix (without considering the energy adjustment). A sequence set including 152 sequences having a length of 4 is constituted by removing the four sequences. In the constituted sequence set, the absolute value of cross-correlation between any two sequences, after energy of each of any two sequences is normalized, is not greater than 0.8.

It is to be noted that, in the sequence set of each application example described above, the order of the sequences may be different from the order shown in the above table, and the order of the sequence elements may also be different from the order shown in the above table.

From the description of the implementation modes described above, it will be apparent to those skilled in the art that the method in the embodiments described above may be implemented by software plus a necessary general-purpose hardware platform, or may of course be implemented by hardware. However, in many cases, the former is a preferred implementation mode. Based on this understanding, the solutions provided by the present invention substantially, or the part contributing to the existing art, may be embodied in the form of a software product. The computer software product is stored in a storage medium (such as an ROM/RAM, a magnetic disk or an optical disk) and includes several instructions for enabling a terminal device (which may be a mobile phone, a computer, a server, a network device, or the like) to execute the method according to each embodiment of the present invention.

### Embodiment 2

This embodiment provides a data generation device, a transmitter and a terminal for implementing the above-mentioned embodiments and preferred implementation modes. What has been described will not be repeated. As used below, the term "module" may be software, hardware or a combination thereof capable of implementing predetermined functions. The device in the embodiments described below is preferably implemented by software, but implementation by hardware or by a combination of software and hardware is also possible and conceived.

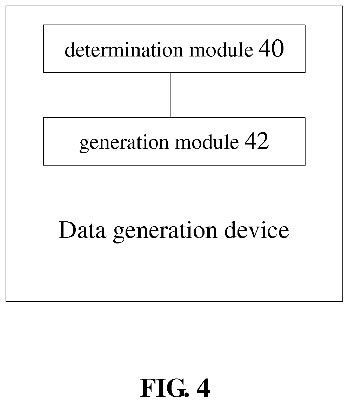

FIG. 4 is a structure diagram of a data generation device according to an embodiment of the present invention. As shown in FIG. 4, the device includes a determination module 40 and a generation module 42.

The determination module 40 is configure to determine a sequence to be used from a sequence set, where the sequence set includes N sequences having a length of L and includes at least one of following characteristics: an absolute value of cross-correlation between any two sequences among the N sequences being not greater than a first preset threshold, a square sum of non-diagonal elements of a cross-correlation matrix of the N sequences being equal to a second preset threshold, the N sequences including sequences whose elements come from a first real number set, the N sequences including sequences whose elements each have a real part and an imaginary part coming from a second real number set, the N sequences including sequences whose elements each have an amplitude equaling to M and a phase coming from a third real number set, and the N sequences including sequences whose elements come from a first complex number set, where N and L are positive integers and M is a real number.

The generation module 42 is configured to process a first symbol by using the sequence to be used so as to generate a second symbol.

Optionally, the device further includes a transmission module 44, which is configured to transmit the second symbol.

Optionally, the absolute value of cross-correlation between any two sequences among the N sequences being not greater than a first preset threshold includes one of: the absolute value of cross-correlation between any two sequences, after energy of each of any two sequences is normalized, among the N sequences being not greater than the first preset threshold, and the absolute value of cross-correlation between any two sequences, after the energy of each of any two sequences is normalized, among the N sequences being the same and being equal to the first preset threshold, where the first preset threshold includes 0.5, sqrt(2)/2, 0.8 or sqrt((N-L)/(L*(N-1))), and sqrt() is a square root function.

Optionally, the square sum of non-diagonal elements of a cross-correlation matrix of the N sequences being equal to a second preset threshold includes the square sum of the non-diagonal elements of the cross-correlation matrix of the N sequences, after energy of each of the N sequences is normalized, being equal to the second preset threshold, where the second preset threshold includes N*(N-L)/L.

Optionally, a value of the sequence length L includes, but is not limited to: 4, 6 or 8, where L represents the number of elements in the sequence.

Optionally, the number of sequences N is a square of the sequence length L.

Optionally, the first real number set includes: {0, 1}, {-1, 1}, {-0.5, 0.5} or {0, sqrt(2)}. Optionally, the second real number set includes: {-1, 1}, {-sqrt(2)/2, sqrt(2)/2}, {-sqrt(2)/4, sqrt(2)/4}, {-1, 0, 1}, {-0.5, 0, 0.5}, {-0.5, -sqrt(2)/4, 0, sqrt(2)/4, 0.5}, {-sqrt(2), 0, sqrt(2)} or {-3, -1, 1, 3}.

Optionally, the third real number set includes: {-3, -1, 1, 3}*π/4, {0, 1, 2, 3}*π/2, {0, 1, 2, 3, 4, 5, 6, 7}*π/4, n*k*2π/N or -n*k*2π/N, where k is an integer and n is a nonnegative integer less than or equal to N.

Optionally, the first complex number set includes:
{ 1+1i, -1+1i, -1-1i, 1-1i},
{(1+1i)/sqrt(2), (-1+1i)/sqrt(2), (-1-li)/sqrt(2), (1-1i)/sqrt(2)},
{(1+1i)*sqrt(2)/4, (-1+1i)*sqrt(2)/4, (-1-li)*sqrt(2)/4, (1-1i)*sqrt(2)/41,
{1+0i, 0+1i, -1+0i, 0-1i},
{0.5+0i, 0+0.5i, -0.5+0i, 0-0.5i},
{ 1+li, -1+li, -1-1i, 1-1i, 0},
{1+0i, 0+1i, -1+0i, 0-1i, 0},
{0.5+0i, 0+0.5i, -0.5+0i, 0-0.5i, 0},
{0.5+0.5i, -0.5+0.5i, -0.5-0.5i, 0.5-0.5i, 0}, or
{0, 1, 1+li, 1i, -1+li, -1, -1-1i, -1i, 1-1i}.

Optionally, the device in this embodiment may be, but is not limited to, disposed in a terminal side device or a base station side device.

Optionally, the determination module 40 may be, but is not limited to, disposed in a baseband chip of the device.

Optionally, the generation module 42 may be, but is not limited to, disposed in the baseband chip of the device.

Optionally, the transmission module 44 may be, but is not limited to, disposed in at least one of: the baseband chip, a radio-frequency circuit, or a radio-frequency antenna of the device.

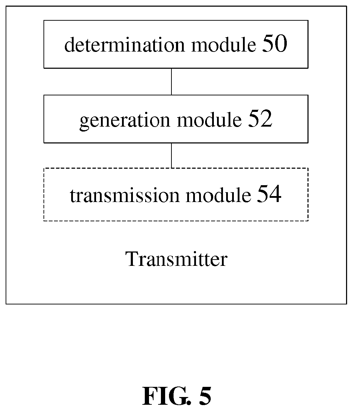

FIG. 5 is a structure diagram of a transmitter according to an embodiment of the present invention. As shown in FIG. 5, the transmitter includes a determination module 50 and a generation module 52.

The determination module 50 is configure to determine a sequence to be used from a sequence set, where the sequence set includes N sequences having a length of L and includes at least one of following characteristics: an absolute value of cross-correlation between any two sequences among the N sequences being not greater than a first preset threshold, a square sum of non-diagonal elements of a cross-correlation matrix of the N sequences being equal to a second preset threshold, the N sequences including sequences whose elements come from a first real number set, the N sequences including sequences whose elements each have a real part and an imaginary part coming from a second real number set, the N sequences including sequences whose elements each have an amplitude equaling to M and a phase coming from a third real number set, and the N sequences including sequences whose elements come from a first complex number set, where N and L are positive integers and M is a real number.

The generation module 52 is configured to process a first symbol by using the sequence to be used so as to generate a second symbol.

Optionally, as shown in FIG. 5, the transmitter further includes a transmission module 54, which is configured to transmit the second symbol.

Optionally, the transmitter in this embodiment may be, but is not limited to, disposed in the terminal side device or the base station side device.

Optionally, the determination module 50 may be, but is not limited to, disposed in a baseband chip of the transmitter in this embodiment.

Optionally, the generation module 52 may be, but is not limited to, disposed in the baseband chip of the transmitter in this embodiment.

Optionally, the transmission module 54 may be, but is not limited to, disposed in at least one of: the baseband chip, a radio-frequency circuit, or a radio-frequency antenna of the transmitter in this embodiment.

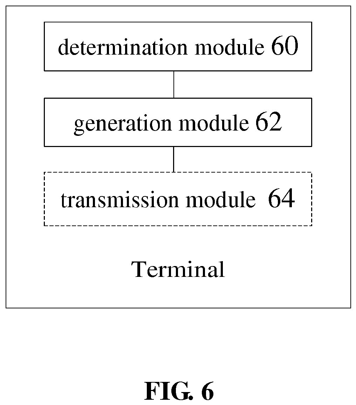

FIG. 6 is a structure diagram of a terminal according to an embodiment of the present invention.

As shown in FIG. 6, the terminal includes a determination module 60 and a generation module 62.

The determination module 60 is configure to determine a sequence to be used from a sequence set, where the sequence set includes N sequences having a length of L and includes at least one of following characteristics: an absolute value of cross-correlation between any two sequences among the N sequences being not greater than a first preset threshold, a square sum of non-diagonal elements of a cross-correlation matrix of the N sequences being equal to a second preset threshold, the N sequences including sequences whose elements come from a first real number set, the N sequences including sequences whose elements each have a real part and an imaginary part coming from a second real number set, the N sequences including sequences whose elements each have an amplitude equaling to M and a phase coming from a third real number set, and the N sequences including sequences whose elements come from a first complex number set, where N and L are positive integers and M is a real number.

The generation module 62 is configured to process a first symbol by using the sequence to be used so as to generate a second symbol.

Optionally, as shown in FIG. 6, the terminal further includes a transmission module 64, which is configured to transmit the second symbol.

Optionally, the determination module 60 may be, but is not limited to, disposed in a baseband chip of the terminal in this embodiment.

Optionally, the determination module 62 may be, but is not limited to, disposed in the baseband chip of the terminal in this embodiment.

Optionally, the transmission module 64 may be, but is not limited to, disposed in at least one of: the baseband chip, a radio-frequency circuit, or a radio-frequency antenna of the terminal in this embodiment.

It is to be noted that the various modules described above may be implemented by software or hardware. Implementation by hardware may, but may not necessarily, be performed in the following manners: the various modules described above are located in a same processor, or the various modules described above are located in their respective processors in any combination form.

### Embodiment 3

Embodiments of the present invention further provides a storage medium. Optionally, in this embodiment, the storage medium may be configured to store program codes for executing the steps described below.

In step S 1, a sequence to be used is determined from a sequence set, where the sequence set includes N sequences having a length of L and includes at least one of following characteristics: an absolute value of cross-correlation between any two sequences among the N sequences being not greater than a first preset threshold, a square sum of non-diagonal elements of a cross-correlation matrix of the N sequences being equal to a second preset threshold, the N sequences including sequences whose elements come from a first real number set, the N sequences including sequences whose elements each have a real part and an imaginary part coming from a second real number set, the N sequences including sequences whose elements each have an amplitude equaling to M and a phase coming from a third real number set, and the N sequences including sequences whose elements come from a first complex number set, where N and L are positive integers and M is a real number.

In step S2, a first symbol is processed by using the sequence to be used so as to generate a second symbol.

Optionally, the storage medium is further configured to store program codes for executing the following step. In step S3, the second symbol is transmitted.

Optionally, in this embodiment, the storage medium may include, but is not limited to, a U disk, a read-only memory (ROM), a random access memory (RAM), a mobile hard disk, a magnetic disk, an optical disk or another medium capable of storing the program codes.

Optionally, in this embodiment, the processor executes the following step according to program codes stored in the storage medium: a sequence to be used is determined from a sequence set, where the sequence set includes N sequences having a length of L and includes at least one of following characteristics: an absolute value of cross-correlation between any two sequences among the N sequences being not greater than a first preset threshold, a square sum of non-diagonal elements of a cross-correlation matrix of the N sequences being equal to a second preset threshold, the N sequences including sequences whose elements come from a first real number set, the N sequences including sequences whose elements each have a real part and an imaginary part coming from a second real number set, the N sequences including sequences whose elements each have an amplitude equaling to M and a phase coming from a third real number set, and the N sequences including sequences whose elements come from a first complex number set, where N and L are positive integers and M is a real number.

Optionally, in this embodiment, a processor executes the following step according to the program codes stored in the storage medium: a first symbol is processed by using the sequence to be used so as to generate a second symbol.

Optionally, in this embodiment, a processor executes the following step according to the program codes stored in the storage medium: the second symbol is transmitted.

Optionally, for specific examples in the embodiment, reference may be made to the examples described in the above embodiments and optional implementation modes, and repetition will not be made in the embodiment.

Apparently, it should be understood by those skilled in the art that each of the above-mentioned modules or steps of the present invention may be implemented by a general-purpose computing device, the modules or steps may be concentrated on a single computing device or distributed on a network composed of multiple computing devices, and alternatively, the modules or steps may be implemented by program codes executable by the computing devices, so that the modules or steps may be stored in a storage device and executed by the computing devices. In some circumstances, the illustrated or described steps may be executed in sequences different from those described herein, or the modules or steps may be made into various integrated circuit modules separately, or multiple modules or steps therein may be made into a single integrated circuit module for implementation. In this way, the present invention is not limited to any specific combination of hardware and software.

The above are only preferred embodiments of the present invention and are not intended to limit the present invention. For those skilled in the art, the present invention may have various modifications and variations.

### INDUSTRIAL APPLICABILITY

As described above, a data generation method and a device, a transmitter and a terminal provided by the embodiments of the present invention have the following beneficial effects: since the sequence set used by the provided data generation method includes a certain number of sequences with better cross-correlation features, the collision probability of the access devices may be maintained at a low level, and detection complexity of the receiver may be reduced. Therefore, the problems of the sequence design for scheduling-free access and the data processing and transmission are solved, and impacts of access device collisions and detection complexity of the receiver on scheduling-free access performance are effectively controlled, thereby effectively implementing contention-based or scheduling-free access and data transmission.

## Claims

1. A data generation method, applied to a terminal, comprising determining (101) a sequence to be used from a sequence set, wherein the sequence set comprises N sequences having a length of L and comprises at least one of following characteristics:
an absolute value of cross-correlation between any two sequences among the N sequences being not greater than a first preset threshold,
a square sum of non-diagonal elements of a cross-correlation matrix of the N sequences being equal to a second preset threshold,
the N sequences comprising sequences whose elements come from a first real number set,
the N sequences comprising sequences whose elements each have a real part and an imaginary part coming from a second real number set,
the N sequences comprising sequences whose elements each have an amplitude equaling to M and a phase coming from a third real number set, and
the N sequences comprising sequences whose elements come from a first complex number set,
wherein N and L are positive integers and M is a real number; and
processing (102) a first symbol by using the sequence to be used so as to generate a second symbol, **characterized in that** the first symbol comprises a symbol generated by performing encoding and modulation on data bits to be transmitted, and the data bits to be transmitted comprises identification information of the terminal and information of the sequence to be used.

2. The method according to claim 1, wherein the absolute value of cross-correlation between any two sequences among the N sequences being not greater than a first preset threshold comprises one of:
the absolute value of cross-correlation between any two sequences, after energy of each of the any two sequences is normalized, among the N sequences being not greater than the first preset threshold, or
the absolute value of cross-correlation between any two sequences, after the energy of each of the any two sequences is normalized, among the N sequences being the same and being equal to the first preset threshold,
wherein the first preset threshold comprises 0.5, sqrt(2)/2, 0.8 or sqrt((N-L)/(L*(N-1))), wherein sqrt() is a square root function.

3. The method according to claim 1, wherein the square sum of non-diagonal elements of a cross-correlation matrix of the N sequences being equal to a second preset threshold comprises:
the square sum of the non-diagonal elements of the cross-correlation matrix of the N sequences,
after energy of each of the N sequences is normalized, being equal to the second preset threshold,
wherein the second preset threshold comprises N*(N-L)/L.

4. The method according to claim 1, wherein the first real number set comprises: {0, 1}, {-1, 1}, {-0.5, 0.5} or {0, sqrt(2)}.

5. The method according to claim 1, wherein the second real number set comprises: {-1, 1}, {-sqrt(2)/2, sqrt(2)/2}, {-sqrt(2)/4, sqrt(2)/4}, {-1, 0, 1}, {-0.5, 0, 0.5}, {-0.5, -sqrt(2)/4, 0, sqrt(2)/4, 0.5}, {-sqrt(2), 0, sqrt(2)} or {-3, -1, 1, 3}.

6. The method according to claim 1, wherein the third real number set comprises: {-3, -1, 1, 3}*π/4, {0, 1, 2, 3}*π/2, {0, 1, 2, 3, 4, 5, 6, 7}*π/4, n*k*2π/N or -n*k*2π/N, wherein k is an integer and n is a nonnegative integer less than or equal to N.

7. The method according to claim 1, wherein the first complex number set comprises:
{ 1+1i, -1+1i, -1-1i, 1-1i},
{(1+1i)/sqrt(2), (-1+1i)/sqrt(2), (-1-1i)/sqrt(2), (1-1i)/sqrt(2)},
{(1+1i)*sqrt(2)/4, (-1 + li)*sqrt(2)/4, (-1-1i)*sqrt(2)/4, (1-1i)*sqrt(2)/4},
{ 1+0i, 0+1i, -1+0i, 0-1i},
{0.5+0i, 0+0.5i, -0.5+0i, 0-0.5i},
{ 1+li, -1+li, -1-1i, 1-1i, 0},
{ 1+0i, 0+1i, -1+0i, 0-1i, 0},
{0.5+0i, 0+0.5i, -0.5+0i, 0-0.5i, 0},
{0.5+0.5i, -0.5+0.5i, -0.5-0.5i, 0.5-0.5i, 0}, or
{0, 1, 1+1i, 1i, -1+li, -1, -1-1i, -1i, 1-1i}.

8. The method according to claim 1, wherein the sequence set comprises one of sequence sets shown in Table 1, Table 2, Table 3, Table 4 and Table 5:
**Table 1**
| sequence index | sequence elements | | | |
|---|---|---|---|---|
| 0 | 1 | 1 | 1 | 1 |
| 1 | 1 | exp(-j*1*1*2π/13) | exp(-j*1*3*2π/13) | exp(-j*1*9*2π/13) |
| 2 | 1 | exp(-j*2*1*2π/13) | exp(-j*2*3*2π/13) | exp(-j*2*9*2π/13) |
| 3 | 1 | exp(-j*3*1*2π/13) | exp(-j*3*3*2π/13) | exp(-j*3*9*2π/13) |
| 4 | 1 | exp(-j*4*1*2π/13) | exp(-j*4*3*2π/13) | exp(-j*4*9*2π/13) |
| 5 | 1 | exp(-j*5*1*2π/13) | exp(-j*5*3*2π/13) | exp(-j*5*9*2π/13) |
| 6 | 1 | exp(-j*6*1*2π/13) | exp(-j*6*3*2π/13) | exp(-j*6*9*2π/13) |
| 7 | 1 | exp(-j*7*1*2π/13) | exp(-j*7*3*2π/13) | exp(-j*7*9*2π/13) |
| 8 | 1 | exp(-j*8*1*2π/13) | exp(-j*8*3*2π/13) | exp(-j*8*9*2π/13) |
| 9 | 1 | exp(-j*9*1*2π/13) | exp(-j*9*3*2π/13 ) | exp(-j*9*9*2π/13) |
| 10 | 1 | exp(-j*10*1*2π/13) | exp(-j*10*3*2π/13) | exp(-j*10*9*2π/13) |
| 11 | 1 | exp(-j*11*1*2π/13) | exp(-j*11*3*2π/13) | exp(-j*11*9*2π/13) |
| 12 | 1 | exp(-j*12*1*2π/13) | exp(-j*12*3*2π/13) | exp(-j*12*9*2π/13) |
**Table 2**
| sequence index | sequence elements | | | |
|---|---|---|---|---|
| 0 | 1+1i | 1+1i | 1+1i | -1-1i |
| 1 | 1+1i | 1+1i | -1+1i | -1+1i |
| 2 | 1+1i | 1+1i | -1-1i | 1+1i |
| 3 | 1+1i | 1+1i | 1-1i | 1-1i |
| 4 | 1+1i | -1+1i | 1+1i | -1+1i |
| 5 | 1+1i | -1+1i | -1+1i | 1+1i |
| 6 | 1+1i | -1+1i | -1-1i | 1-1i |
| 7 | 1+1i | -1+1i | 1-1i | -1-1i |
| 8 | 1+1i | -1-1i | 1+1i | 1+1i |
| 9 | 1+1i | -1-1i | -1+1i | 1-1i |
| 10 | 1+1i | -1-1i | -1-1i | -1-1i |
| 11 | 1+1i | -1-1i | 1-1i | -1+1i |
| 12 | 1+1i | 1-1i | 1+1i | 1-1i |
| 13 | 1+1i | 1-1i | -1+1i | -1-1i |
| 14 | 1+1i | 1-1i | -1-1i | -1+1i |
| 15 | 1+1i | 1-1i | 1-1i | 1+1i |
**Table 3**
| sequence index | sequence elements | | | |
|---|---|---|---|---|
| 0 | 1+0i | 1+0i | 1+0i | -1+0i |
| 1 | 1+0i | 1+0i | 0+1i | 0+1i |
| 2 | 1+0i | 1+0i | -1+0i | 1+0i |
| 3 | 1+0i | 1+0i | 0-1i | 0-1i |
| 4 | 1+0i | 0+1i | 1+0i | 0+1i |
| 5 | 1+0i | 0+1i | 0+1i | 1+0i |
| 6 | 1+0i | 0+1i | -1+0i | 0-1i |
| 7 | 1+0i | 0+1i | 0-1i | -1+0i |
| 8 | 1+0i | -1+0i | 1+0i | 1+0i |
| 9 | 1+0i | -1+0i | 0+1i | 0-1i |
| 10 | 1+0i | -1+0i | -1+0i | -1+0i |
| 11 | 1+0i | -1+0i | 0-1i | 0+1i |
| 12 | 1+0i | 0-1i | 1+0i | 0-1i |
| 13 | 1+0i | 0-1i | 0+1i | -1+0i |
| 14 | 1+0i | 0-1i | -1+0i | 0+1i |
| 15 | 1+0i | 0-1i | 0-1i | 1+0i |
**Table 4**
| sequence index | sequence elements | | | |
|---|---|---|---|---|
| 0 | 1+1i | 1+1i | 1+1i | 1+1i |
| 1 | 1+1i | 1+1i | 1+1i | 1+1i |
| 2 | 1+1i | 1+1i | -1-1i | 1+1i |
| 3 | 1+1i | 1+1i | -1-1i | -1-1i |
| 4 | 1+1i | 1+1i | -1+1i | -1+1i |
| 5 | 1+1i | 1+1i | -1+1i | 1-1i |
| 6 | 1+1i | 1+1i | 1-1i | -1+1i |
| 7 | 1+1i | 1+1i | 1-1i | 1-1i |
| 8 | 1+1i | -1+1i | 1+1i | -1+1i |
| 9 | 1+1i | -1+1i | 1+1i | 1-1i |
| 10 | 1+1i | -1+1i | -1-1i | -1+1i |
| 11 | 1+1i | -1+1i | -1-1i | 1-1i |
| 12 | 1+1i | -1+1i | -1+1i | 1+1i |
| 13 | 1+1i | -1+1i | -1+1i | -1-1i |
| 14 | 1+1i | -1+1i | 1-1i | 1+1i |
| 15 | 1+1i | -1+1i | 1-1i | -1-1i |
| 16 | 1+1i | -1-1i | 1+1i | 1+1i |
| 17 | 1+1i | -1-1i | 1+1i | -1-1i |
| 18 | 1+1i | -1-1i | -1-1i | 1+1i |
| 19 | 1+1i | -1-1i | -1-1i | -1-1i |
| 20 | 1+1i | -1-1i | -1+1i | -1+1i |
| 21 | 1+1i | -1-1i | -1+1i | 1-1i |
| 22 | 1+1i | -1-1i | 1-1i | -1+1i |
| 23 | 1+1i | -1-1i | 1-1i | 1-1i |
| 24 | 1+1i | 1-1i | 1+1i | -1+1i |
| 25 | 1+1i | 1-1i | 1+1i | 1-1i |
| 26 | 1+1i | 1-1i | -1-1i | -1+1i |
| 27 | 1+1i | 1-1i | -1-1i | 1-1i |
| 28 | 1+1i | 1-1i | -1+1i | 1+1i |
| 29 | 1+1i | 1-1i | -1+1i | -1-1i |
| 30 | 1+1i | 1-1i | 1-1i | 1+1i |
| 31 | 1+1i | 1-1i | 1-1i | -1-1i |
**Table 5**
| sequence index | sequence elements | | | |
|---|---|---|---|---|
| 0 | 1+1i | 1+1i | 1+1i | 1+1i |
| 1 | 1+1i | 1+1i | 1+1i | -1+1i |
| 2 | 1+1i | 1+1i | 1+1i | -1-1i |
| 3 | 1+1i | 1+1i | 1+1i | 1-1i |
| 4 | 1+1i | 1+1i | -1+1i | 1+1i |
| 5 | 1+1i | 1+1i | -1+1i | -1+1i |
| 6 | 1+1i | 1+1i | -1+1i | -1-1i |
| 7 | 1+1i | 1+1i | -1+1i | 1-1i |
| 8 | 1+1i | 1+1i | -1-1i | 1+1i |
| 9 | 1+1i | 1+1i | -1-1i | -1+1i |
| 10 | 1+1i | 1+1i | -1-1i | -1-1i |
| 11 | 1+1i | 1+1i | -1-1i | 1-1i |
| 12 | 1+1i | 1+1i | 1-1i | 1+1i |
| 13 | 1+1i | 1+1i | 1-1i | -1+1i |
| 14 | 1+1i | 1+1i | 1-1i | -1-1i |
| 15 | 1+1i | 1+1i | 1-1i | 1-1i |
| 16 | 1+1i | -1+1i | 1+1i | 1+1i |
| 17 | 1+1i | -1+1i | 1+1i | -1+1i |
| 18 | 1+1i | -1+1i | 1+1i | -1-1i |
| 19 | 1+1i | -1+1i | 1+1i | 1-1i |
| 20 | 1+1i | -1+1i | -1+1i | 1+1i |
| 21 | 1+1i | -1+1i | -1+1i | -1+1i |
| 22 | 1+1i | -1+1i | -1+1i | -1-1i |
| 23 | 1+1i | -1+1i | -1+1i | 1-1i |
| 24 | 1+1i | -1+1i | -1-1i | 1+1i |
| 25 | 1+1i | -1+1i | -1-1i | -1+1i |
| 26 | 1+1i | -1+1i | -1-1i | -1-1i |
| 27 | 1+1i | -1+1i | -1-1i | 1-1i |
| 28 | 1+1i | -1+1i | 1-1i | 1+1i |
| 29 | 1+1i | -1+1i | 1-1i | -1+1i |
| 30 | 1+1i | -1+1i | 1-1i | -1-1i |
| 31 | 1+1i | -1+1i | 1-1i | 1-1i |
| 32 | 1+1i | -1-1i | 1+1i | 1+1i |
| 33 | 1+1i | -1-1i | 1+1i | -1+1i |
| 34 | 1+1i | -1-1i | 1+1i | -1-1i |
| 35 | 1+1i | -1-1i | 1+1i | 1-1i |
| 36 | 1+1i | -1-1i | -1+1i | 1+1i |
| 37 | 1+1i | -1-1i | -1+1i | -1+1i |
| 38 | 1+1i | -1-1i | -1+1i | -1-1i |
| 39 | 1+1i | -1-1i | -1+1i | 1-1i |
| 40 | 1+1i | -1-1i | -1-1i | 1+1i |
| 41 | 1+1i | -1-1i | -1-1i | -1+1i |
| 42 | 1+1i | -1-1i | -1-1i | -1-1i |
| 43 | 1+1i | -1-1i | -1-1i | 1-1i |
| 44 | 1+1i | -1-1i | 1-1i | 1+1i |
| 45 | 1+1i | -1-1i | 1-1i | -1+1i |
| 46 | 1+1i | -1-1i | 1-1i | -1-1i |
| 47 | 1+1i | -1-1i | 1-1i | 1-1i |
| 48 | 1+1i | 1-1i | 1+1i | 1+1i |
| 49 | 1+1i | 1-1i | 1+1i | -1+1i |
| 50 | 1+1i | 1-1i | 1+1i | -1-1i |
| 51 | 1+1i | 1-1i | 1+1i | 1-1i |
| 52 | 1+1i | 1-1i | -1+1i | 1+1i |
| 53 | 1+1i | 1-1i | -1+1i | -1+1i |
| 54 | 1+1i | 1-1i | -1+1i | -1-1i |
| 55 | 1+1i | 1-1i | -1+1i | 1-1i |
| 56 | 1+1i | 1-1i | -1-1i | 1+1i |
| 57 | 1+1i | 1-1i | -1-1i | -1+1i |
| 58 | 1+1i | 1-1i | -1-1i | -1-1i |
| 59 | 1+1i | 1-1i | -1-1i | 1-1i |
| 60 | 1+1i | 1-1i | 1-1i | 1+1i |
| 61 | 1+1i | 1-1i | 1-1i | -1+1i |
| 62 | 1+1i | 1-1i | 1-1i | -1-1i |
| 63 | 1+1i | 1-1i | 1-1i | 1-1i |
wherein, i and j are imaginary units;
preferably, wherein the sequence set comprises a sequence set composed of a unit matrix sequence set and one of the sequence sets shown in Table 1, Table 2, Table 3, Table 4 and Table 5, wherein a length of each of sequences in the unit matrix sequence set is the same as a length of each of sequences in the sequence set shown in Table 1, Table 2, Table 3, Table 4 or Table 5, and
wherein the unit matrix sequence set comprises:
| sequence index | sequence elements | | | |
|---|---|---|---|---|
| 0 | 1*a | 0 | 0 | 0 |
| 1 | 0 | 1*a | 0 | 0 |
| 2 | 0 | 0 | 1*a | 0 |
| 3 | 0 | 0 | 0 | 1*a |
wherein a is an energy adjustment factor which enables the energy of each of the sequences in the unit matrix sequence set to be the same as the energy of each of the sequences in the sequence set shown in Table 1, Table 2, Table 3, Table 4 or Table 5.

9. The method according to claim 1, wherein the determining a sequence to be used from a sequence set comprises one of:
randomly selecting X sequences from the sequence set, and letting the selected X sequences as X sequences to be used;
randomly selecting X sequences from the sequence set, randomly selecting one cyclic shift, and
performing cyclic shift processing on each of the selected X sequences according to the one cyclic shift to obtain X sequences to be used;
randomly selecting X sequences from the sequence set, randomly selecting one cyclic shift for each of the selected X sequences, and performing cyclic shift processing on each of the selected X sequences according to the corresponding cyclic shift to obtain X sequences to be used; and
obtaining X sequences from the sequence set according to system configuration information, and
letting the obtained X sequences as X sequences to be used, wherein X is a positive integer.

10. The method according to claim 1, wherein the processing a first symbol by using the sequence to be used so as to generate a second symbol comprises:
performing spreading process on the first symbol by using the sequence to be used so as to generate a second symbol.

11. The method according to claim 1, wherein the first symbol further comprises at least one of:
a pilot symbol and a reference signal.

12. The method according to claim 1, wherein after processing a first symbol by using the sequence to be used so as to generate a second symbol, the method further comprises:
transmitting the second symbol;
preferably, wherein the transmitting the second symbol comprises: generating a signal by the second symbol on a transmission resource, and transmitting the signal.

13. A terminal, comprising:
a determination module (60), which is configure to determine a sequence to be used from a sequence set, wherein the sequence set comprises N sequences having a length of L and comprises at least one of following characteristics: an absolute value of cross-correlation between any two sequences among the N sequences being not greater than a first preset threshold, a square sum of non-diagonal elements of a cross-correlation matrix of the N sequences being equal to a second preset threshold, the N sequences comprising sequences whose elements come from a first real number set, the N sequences comprising sequences whose elements each have a real part and an imaginary part coming from a second real number set, the N sequences comprising sequences whose elements each have an amplitude equaling to M and a phase coming from a third real number set, and the N sequences comprising sequences whose elements come from a first complex number set, wherein N and L are positive integers and M is a real number; and
a generation module (62), which is configured to process a first symbol by using the sequence to
be used so as to generate a second symbol, **characterized in that** the first symbol comprises a symbol generated by performing encoding and modulation on data bits to be transmitted, and the data bits to be transmitted comprises identification information of the terminal and information of the sequence to be used.

## Patentansprüche

1. Verfahren zur Datenerzeugung, angewandt auf ein Endgerät, umfassend:
Bestimmen (101) einer zu verwendenden Sequenz aus einem Sequenzsatz, wobei der Sequenzsatz N Sequenzen mit einer Länge von L umfasst und mindestens eines der folgenden Merkmale umfasst:
einen Absolutwert der Kreuzkorrelation zwischen zwei beliebigen Sequenzen unter den N Sequenzen, der nicht größer als ein erster voreingestellter Schwellenwert ist,
eine Quadratsumme von Nicht-Diagonalelementen einer Kreuzkorrelationsmatrix der N Sequenzen, die gleich einem zweiten voreingestellten Schwellenwert ist,
die N Sequenzen, umfassend Sequenzen, deren Elemente aus einem ersten Satz reeller Zahlen stammen,
die N Sequenzen, umfassend Sequenzen, deren Elemente jeweils einen Realteil und einen Imaginärteil aufweisen, die aus einem zweiten Satz reeller Zahlen stammen,
die N Sequenzen, umfassend Sequenzen, deren Elemente jeweils eine Amplitude gleich M und eine Phase aufweisen, die aus einem dritten Satz reeller Zahlen stammt, und
die N Sequenzen, umfassend Sequenzen, deren Elemente aus einem ersten Satz komplexer Zahlen stammen, wobei N und L positive ganze Zahlen sind und M eine reelle Zahl ist; und
Verarbeiten (102) eines ersten Symbols unter Verwendung der zu verwendenden Sequenz, um ein zweites Symbol zu erzeugen,
**dadurch gekennzeichnet, dass**
das erste Symbol ein Symbol umfasst, das durch Durchführen einer Codierung und Modulation an zu übermittelnden Datenbits erzeugt wird, und die zu übermittelnden Datenbits Identifikationsinformationen des Endgeräts und Informationen der zu verwendenden Sequenz umfassen.

2. Verfahren nach Anspruch 1, wobei der Absolutwert der Kreuzkorrelation zwischen zwei beliebigen Sequenzen unter den N Sequenzen, der nicht größer als ein erster voreingestellter Schwellenwert ist, eines von Folgendem umfasst:
dass der Absolutwert der Kreuzkorrelation zwischen zwei beliebigen Sequenzen unter den N Sequenzen nicht größer als der erste voreingestellte Schwellenwert ist, nachdem die Energie jeder der zwei beliebigen Sequenzen normalisiert wurde, oder
dass der Absolutwert der Kreuzkorrelation zwischen zwei beliebigen Sequenzen unter den N Sequenzen gleich ist und gleich dem ersten voreingestellten Schwellenwert ist, nachdem die Energie jeder der zwei beliebigen Sequenzen normalisiert wurde,
wobei der erste voreingestellte Schwellenwert 0,5, sqrt(2)/2, 0,8 oder sqrt((N-L)/(L*(N-1))) umfasst, wobei sqrt() eine Quadratwurzelfunktion ist.

3. Verfahren nach Anspruch 1, wobei die Quadratsumme der Nicht-Diagonalelemente einer Kreuzkorrelationsmatrix der N Sequenzen, die gleich einem zweiten voreingestellten Schwellenwert ist, Folgendes umfasst:
dass die Quadratsumme der Nicht-Diagonalelemente der Kreuzkorrelationsmatrix der N Sequenzen gleich dem zweiten voreingestellten Schwellenwert ist, nachdem die Energie jeder der N Sequenzen normalisiert wurde, wobei der zweite voreingestellte Schwellenwert N*(N-L)/L umfasst.

4. Verfahren nach Anspruch 1, wobei der erste Satz reeller Zahlen Folgendes umfasst: {0, 1}, {-1, 1}, {-0,5, 0,5} oder {0, sqrt(2) }.

5. Verfahren nach Anspruch 1, wobei der zweite Satz reeller Zahlen Folgendes umfasst: {-1, 1}, {-sqrt(2)/2, sqrt (2) /2}, {-sqrt(2)/4, sqrt(2)/4}, {-1, 0, 1}, {-0,5, 0, 0,5}, {-0,5, - sqrt (2) /4, 0, sqrt (2) /4, 0,5}, {-sqrt(2), 0, sqrt(2)} oder {-3, -1, 1, 3}.

6. Verfahren nach Anspruch 1, wobei der dritte Satz reeller Zahlen Folgendes umfasst: {-3, -1, 1, 3}*n/4, {0, 1, 2, 3 }*π/2, {0, 1, 2, 3, 4, 5, 6, 7}*n/4, n*k*2n/N oder -n*k*2n/N, wobei k eine ganze Zahl ist und n eine nicht-negative ganze Zahl kleiner oder gleich N ist.

7. Verfahren nach Anspruch 1, wobei der erste Satz komplexer Zahlen Folgendes umfasst:
{1+1i, -1+1i, -1-1i, 1-1i},
{(1+1i)/sqrt(2), (-1+1i)/sqrt(2), (-1-1i)/sqrt(2), (1-1i) /sqrt (2)},
{(1+1i)*sqrt(2)/4, (-1+li)*sqrt(2)/4, (-1-1i)*sqrt(2)/4, (1-1i)*sqrt(2)/4},
{1+0i, 0+1i, -1+0i, 0-1i},
{0,5+0i, 0+0,5i, -0,5+0i, 0-0,5i},
{1+1i, -1+1i, -1-1i, 1-1i, 0},
{1+0i, 0+1i, -1+0i, 0-1i, 0},
{0,5+0i, 0+0,5i, -0,5+0i, 0-0,5i, 0},
{0,5+0,5i, -0,5+0,5i, -0,5-0,5i, 0,5-0,5i, 0}, oder
{0, 1, 1+1i, 1i, -1+1i, -1, -1-1i, -1i, 1-1i}.

8. Verfahren nach Anspruch 1, wobei der Sequenzsatz einen der in Tabelle 1, Tabelle 2, Tabelle 3, Tabelle 4 und Tabelle 5 dargestellten Sequenzsätze umfasst:
**Tabelle 1**
| Sequenzindex | Sequenzelemente | | | |
|---|---|---|---|---|
| 0 | 1 | 1 | 1 | 1 |
| 1 | 1 | exp (-j*1*1*2π/13) | exp (-j*1*3*2π/13) | exp (-j*1*9*2π/13) |
| 2 | 1 | exp (-j*2*1*2π/13) | exp (-j*2*3*2π/13) | exp (-j*2*9*2π/13) |
| 3 | 1 | exp (-j*3*1*2π/13) | exp (-j*3*3*2π/13) | exp (-j*3*9*2π/13) |
| 4 | 1 | exp (-j*4*1*2π/13) | exp (-j*4*3*2π/13) | exp (-j*4*9*2π/13) |
| 5 | 1 | exp (-j*5*1*2π/13) | exp (-j*5*3*2π/13) | exp (-j*5*9*2π/13) |
| 6 | 1 | exp (-j*6*1*2π/13) | exp (-j*6*3*2π/13) | exp (-j*6*9*2π/13) |
| 7 | 1 | exp (-j*7*1*2π/13) | exp (-j*7*3*2π/13) | exp (-j*7*9*2π/13) |
| 8 | 1 | exp (-j*8*1*2π/13) | exp (-j*8*3*2π/13) | exp (-j*8*9*2π/13) |
| 9 | 1 | exp (-j*9*1*2π/13) | exp (-j*9*3*2π/13) | exp (-j*9*9*2π/13) |
| 10 | 1 | exp (-j*10*1*2π/13) | exp (-j*10*3*2π/13) | exp (-j*10*9*2π/13) |
| 11 | 1 | exp (-j*11*1*2π/13) | exp (-j*11*3*2π/13) | exp (-j* 11* 9*2n/13) |
| 12 | 1 | exp (-j*12*1*2π/13) | exp (-j*12*3*2π/13) | exp (-j* 12*9*2n/13) |
**Tabelle 2**
| Sequenzindex | Sequenzelemente | | | |
|---|---|---|---|---|
| 0 | 1+li | 1+li | 1+li | -1-1i |
| 1 | 1+li | 1+li | -1+li | -1+li |
| 2 | 1+li | 1+li | -1-1i | 1+li |
| 3 | 1+li | 1+li | 1-1i | 1-1i |
| 4 | 1+li | -1+li | 1+li | -1+li |
| 5 | 1+li | -1+li | -1+li | 1+li |
| 6 | 1+li | -1+li | -1-1i | 1-1i |
| 7 | 1+li | -1+li | 1-1i | -1-1i |
| 8 | 1+li | -1-1i | 1+li | 1+li |
| 9 | 1+li | -1-1i | -1+li | 1-1i |
| 10 | 1+li | -1-1i | -1-1i | -1-1i |
| 11 | 1+li | -1-1i | 1-1i | -1+1i |
| 12 | 1+li | 1-1i | 1+li | 1-1i |
| 13 | 1+li | 1-1i | -1+li | -1-1i |
| 14 | 1+li | 1-1i | -1-1i | -1+li |
| 15 | 1+li | 1-1i | 1-1i | 1+li |
**Tabelle 3**
| Sequenzindex | Sequenzelemente | | | |
|---|---|---|---|---|
| 0 | 1+0i | 1+0i | 1+0i | -1+0i |
| 1 | 1+0i | 1+0i | 0+li | 0+li |
| 2 | 1+0i | 1+0i | -1+0i | 1+0i |
| 3 | 1+0i | 1+0i | 0-1i | 0-1i |
| 4 | 1+0i | 0+li | 1+0i | 0+li |
| 5 | 1+0i | 0+li | 0+li | 1+0i |
| 6 | 1+0i | 0+li | -1+0i | 0-1i |
| 7 | 1+0i | 0+li | 0-1i | -1+0i |
| 8 | 1+0i | -1+0i | 1+0i | 1+0i |
| 9 | 1+0i | -1+0i | 0+li | 0-1i |
| 10 | 1+0i | -1+0i | -1+0i | -1+0i |
| 11 | 1+0i | -1+0i | 0-1i | 0+li |
| 12 | 1+0i | 0-1i | 1+0i | 0-1i |
| 13 | 1+0i | 0-1i | 0+li | -1+0i |
| 1 4 | 1+0i | 0-1i | -1+0i | 0+li |
| 1 5 | 1+0i | 0-1i | 0-1i | 1+0i |
**Tabelle 4**
| Sequenzindex | Sequenzelemente | | | |
|---|---|---|---|---|
| 0 | 1+li | 1+li | 1+li | 1+li |
| 1 | 1+li | 1+li | 1+li | 1+li |
| 2 | 1+li | 1+li | -1-1i | 1+li |
| 3 | 1+li | 1+li | -1-1i | -1-1i |
| 4 | 1+li | 1+li | -1+li | -1+li |
| 5 | 1+li | 1+li | -1+li | 1-1i |
| 6 | 1+li | 1+li | 1-1i | -1+li |
| 7 | 1+li | 1+li | 1-1i | 1-1i |
| 8 | 1+li | -1+li | 1+li | -1+li |
| 9 | 1+1i | -1+1i | 1+l1i | 1-1i |
| 10 | 1+1i | -1+1i | -1-1i | -1+1i |
| 11 | 1+1i | -1+1i | -1-1i | 1-1i |
| 12 | 1+1i | -1+1i | -1+1i | 1+1i |
| 13 | 1+1i | -1+1i | -1+1i | -1-1i |
| 14 | 1+1i | -1+1i | 1-1i | 1+1i |
| 15 | 1+1i | -1+1i | 1-1i | -1-1i |
| 16 | 1+1i | -1-1i | 1+1i | 1+1i |
| 17 | 1+1i | -1-1i | 1+1i | -1-1i |
| 18 | 1+1i | -1-1i | -1-1i | 1+1i |
| 19 | 1+1i | -1-1i | -1-1i | -1-1i |
| 20 | 1+1i | -1-1i | -1+1i | -1+1i |
| 21 | 1+1i | -1-1i | -1+1i | 1-1i |
| 22 | 1+1i | -1-1i | 1-1i | -1+1i |
| 23 | 1+1i | -1-1i | 1-1i | 1-1i |
| 24 | 1+1i | 1-1i | 1+1i | -1+1i |
| 25 | 1+1i | 1-1i | 1+1i | 1-1i |
| 26 | 1+1i | 1-1i | -1-1i | -1+1i |
| 27 | 1+1i | 1-1i | -1-1i | 1-1i |
| 28 | 1+1i | 1-1i | -1+1i | 1+1i |
| 29 | 1+1i | 1-1i | -1+1i | -1-1i |
| 30 | 1+1i | 1-1i | 1-1i | 1+1i |
| 3 1 | 1+1i | 1-1i | 1-1i | -1-1i |
**Tabelle 5**
| Sequenzindex | Sequenzelemente | | | |
|---|---|---|---|---|
| 0 | 1+1i | 1+1i | 1+1i | 1+1i |
| 1 | 1+1i | 1+1i | 1+1i | -1+1i |
| 2 | 1+1i | 1+1i | 1+1i | -1-1i |
| 3 | 1+1i | 1+1i | 1+1i | 1-1i |
| 4 | 1+1i | 1+1i | -1+1i | 1+1i |
| 5 | 1+1i | 1+1i | -1+1i | -1+1i |
| 6 | 1+1i | 1+1i | -1+1i | -1-1i |
| 7 | 1+1i | 1+1i | -1+1i | 1-1i |
| 8 | 1+1i | 1+1i | -1-1i | 1+1i |
| 9 | 1+1i | 1+1i | -1-1i | -1+1i |
| 10 | 1+1i | 1+1i | -1-1i | -1-1i |
| 11 | 1+1i | 1+1i | -1-1i | 1-1i |
| 12 | 1+1i | 1+1i | 1-1i | 1+1i |
| 13 | 1+1i | 1+1i | 1-1i | -1+1i |
| 14 | 1+1i | 1+1i | 1-1i | -1-1i |
| 1S | 1+1i | 1+1i | 1-1i | 1-1i |
| 16 | 1+1i | -1+1i | 1+1i | 1+1i |
| 17 | 1+1i | -1+1i | 1+1i | -1+1i |
| 18 | 1+1i | -1+1i | 1+1i | -1-1i |
| 19 | 1+1i | -1+1i | 1+1i | 1-1i |
| 20 | 1+1i | -1+1i | -1+1i | 1+1i |
| 21 | 1+1i | -1+1i | -1+1i | -1+1i |
| 22 | 1+1i | -1+1i | -1+1i | -1-1i |
| 23 | 1+1i | -1+1i | -1+1i | 1-1i |
| 24 | 1+1i | -1+1i | -1-1i | 1+1i |
| 25 | 1+1i | -1+1i | -1-1i | -1+1i |
| 26 | 1+1i | -1+1i | -1-1i | -1-1i |
| 27 | 1+1i | -1+1i | -1-1i | 1-1i |
| 28 | 1+1i | -1+1i | 1-1i | 1+1i |
| 29 | 1+1i | -1+1i | 1-1i | -1+1i |
| 30 | 1+1i | -1+1i | 1-1i | -1-1i |
| 31 | 1+1i | -1+1i | 1-1i | 1-1i |
| 32 | 1+1i | -1-1i | 1+1i | 1+1i |
| 33 | 1+1i | -1-1i | 1+1i | -1+1i |
| 34 | 1+1i | -1-1i | 1+1i | -1-1i |
| 35 | 1+1i | -1-1i | 1+1i | 1-1i |
| 36 | 1+1i | -1-1i | -1+1i | 1+1i |
| 37 | 1+1i | -1-1i | -1+1i | -1+1i |
| 38 | 1+1i | -1-1i | -1+1i | -1-1i |
| 39 | 1+1i | -1-1i | -1+1i | 1-1i |
| 40 | 1+1i | -1-1i | -1-1i | 1+1i |
| 41 | 1+1i | -1-1i | -1-1i | -1+1i |
| 42 | 1+1i | -1-1i | -1-1i | -1-1i |
| 43 | 1+1i | -1-1i | -1-1i | 1-1i |
| 44 | 1+1i | -1-1i | 1-1i | 1+1i |
| 45 | 1+1i | -1-1i | 1-1i | -1+1i |
| 46 | 1+1i | -1-1i | 1-1i | -1-1i |
| 47 | 1+1i | -1-1i | 1-1i | 1-1i |
| 48 | 1+1i | 1-1i | 1+1i | 1+1i |
| 49 | 1+1i | 1-1i | 1+1i | -1+1i |
| 50 | 1+1i | 1-1i | 1+1i | -1-1i |
| 51 | 1+1i | 1-1i | 1+1i | 1-1i |
| 52 | 1+1i | 1-1i | -1+1i | 1+1i |
| 53 | 1+1i | 1-1i | -1+1i | -1+1i |
| 54 | 1+1i | 1-1i | -1+1i | -1-1i |
| 55 | 1+1i | 1-1i | -1+1i | 1-1i |
| 56 | 1+1i | 1-1i | -1-1i | 1+1i |
| 57 | 1+1i | 1-1i | -1-1i | -1+1i |
| 58 | 1+1i | 1-1i | -1-1i | -1-1i |
| 59 | 1+1i | 1-1i | -1-1i | 1-1i |
| 60 | 1+1i | 1-1i | 1-1i | 1+1i |
| 61 | 1+1i | 1-1i | 1-1i | -1+1i |
| 62 | 1+1i | 1-1i | 1-1i | -1-1i |
| 63 | 1+1i | 1-1i | 1-1i | 1-1i |
wobei i und j imaginäre Einheiten sind; wobei vorzugsweise der Sequenzsatz einen Sequenzsatz umfasst, der aus einem Einheitsmatrixsequenzsatz und einem der in Tabelle 1, Tabelle 2, Tabelle 3, Tabelle 4 und Tabelle 5 gezeigten Sequenzsätze besteht, wobei eine Länge jeder der Sequenzen in dem Einheitsmatrixsequenzsatz die gleiche wie eine Länge jeder der Sequenzen in dem in Tabelle 1, Tabelle 2, Tabelle 3, Tabelle 4 oder Tabelle 5 gezeigten Sequenzsatz ist, und wobei der Einheitsmatrixsequenzsatz Folgendes umfasst:
| Sequenzindex | Sequenzelemente | | | |
|---|---|---|---|---|
| 0 | 1*a | 0 | 0 | 0 |
| 1 | 0 | 1*a | 0 | 0 |
| 2 | 0 | 0 | 1*a | 0 |
| 3 | 0 | 0 | 0 | 1*a |
wobei a ein Energieanpassungsfaktor ist, der es ermöglicht, dass die Energie jeder der Sequenzen in dem Einheitsmatrixsequenzsatz die gleiche wie die Energie jeder der Sequenzen in dem in Tabelle 1, Tabelle 2, Tabelle 3, Tabelle 4 oder Tabelle 5 aufgeführten Sequenzsatz ist.

9. Verfahren gemäß Anspruch 1, wobei das Bestimmen einer zu verwendenden Sequenz aus einem Sequenzsatz eines von Folgendem umfasst:
zufälliges Auswählen von X Sequenzen aus dem Sequenzsatz, und Zulassen der ausgewählten X Sequenzen als X zu verwendende Sequenzen;
zufälliges Auswählen von X Sequenzen aus dem Sequenzsatz, zufälliges Auswählen einer zyklischen Verschiebung und
Durchführen einer zyklischen Verschiebungsverarbeitung an jeder der ausgewählten X Sequenzen gemäß der einen zyklischen Verschiebung, um zu verwendende X Sequenzen zu erhalten;
zufälliges Auswählen von X-Sequenzen aus dem Sequenzsatz, zufälliges Auswählen einer zyklischen Verschiebung für jede der ausgewählten X-Sequenzen und Durchführen einer zyklischen Verschiebungsverarbeitung an jeder der ausgewählten X-Sequenzen gemäß der entsprechenden zyklischen Verschiebung, um zu verwendende X-Sequenzen zu erhalten; und
Erhalten von X Sequenzen aus dem Sequenzsatz gemäß der Systemkonfigurationsinformation, und
Zulassen der erhaltenen X Sequenzen als X zu verwendende Sequenzen, wobei X eine positive ganze Zahl ist.

10. Verfahren nach Anspruch 1, wobei das Verarbeiten eines ersten Symbols unter Verwendung der zu verwendenden Sequenz, um ein zweites Symbol zu erzeugen, Folgendes umfasst:
Durchführen eines Spreizprozesses an dem ersten Symbol unter Verwendung der zu verwendenden Sequenz, um ein zweites Symbol zu erzeugen.

11. Verfahren nach Anspruch 1, wobei das erste Symbol ferner mindestens eines von Folgendem umfasst: ein Pilotsymbol und ein Referenzsignal.

12. Verfahren nach Anspruch 1, wobei nach dem Verarbeiten eines ersten Symbols unter Verwendung der zu verwendenden Sequenz, um ein zweites Symbol zu erzeugen, das Verfahren ferner Folgendes umfasst:
Übermitteln des zweiten Symbols;
wobei das Übermitteln des zweiten Symbols vorzugsweise Folgendes umfasst: Erzeugen eines Signals durch das zweite Symbol auf einer Übertragungsressource und Übertragen des Signals.

13. Endgerät, umfassend:
ein Bestimmungsmodul (60), das dazu konfiguriert ist, eine zu verwendende Sequenz aus einem Sequenzsatz zu bestimmen, wobei der Sequenzsatz N Sequenzen mit einer Länge von L umfasst und
mindestens eines der folgenden Merkmale umfasst: dass ein Absolutwert der Kreuzkorrelation zwischen zwei beliebigen Sequenzen unter den N Sequenzen nicht größer als ein erster voreingestellter Schwellenwert ist, dass eine Quadratsumme von Nicht-Diagonalelementen einer Kreuzkorrelationsmatrix der N Sequenzen gleich einem zweiten voreingestellten Schwellenwert ist, dass die N Sequenzen Sequenzen umfassen, deren Elemente aus einem ersten reellen Satz stammen, die N Sequenzen Sequenzen umfassen, deren Elemente jeweils einen Realteil und einen Imaginärteil aufweisen, die aus einem zweiten Satz reeller Zahlen stammen, die N Sequenzen Sequenzen umfassen, deren Elemente jeweils eine Amplitude gleich M und eine Phase aufweisen, die aus einem dritten Satz reeller Zahlen stammt, und
die N Sequenzen Sequenzen umfassen, deren Elemente aus einem ersten Satz komplexer Zahlen stammen, wobei N und L positive ganze Zahlen sind und M eine reelle Zahl ist; und
ein Erzeugungsmodul (62), das dazu konfiguriert ist, ein erstes Symbol unter Verwendung der zu verwendenden Sequenz zu verarbeiten, um ein zweites Symbol zu erzeugen, **dadurch gekennzeichnet, dass** das erste Symbol ein Symbol umfasst, das durch Durchführen von Codierung und Modulation an zu übermittelnden Datenbits erzeugt wird, und die zu übermittelnden Datenbits Identifikationsinformationen des Endgeräts und Informationen der zu verwendenden Sequenz umfassen.

## Revendications

1. Procédé de génération de données, appliqué à un terminal, comprenant :
la détermination (101) d'une séquence à utiliser à partir d'un ensemble de séquences, dans lequel l'ensemble de séquences comprend N séquences ayant une longueur de L et comprend au moins l'une des caractéristiques suivantes :
une valeur absolue d'intercorrélation entre deux séquences quelconques parmi les N séquences n'étant pas supérieure à un premier seuil prédéfini,
une somme des carrés d'éléments non diagonaux d'une matrice d'intercorrélation des N séquences étant égale à un second seuil prédéfini,
les N séquences comprenant des séquences dont des éléments proviennent d'un premier ensemble de nombres réels,
les N séquences comprenant des séquences dont des éléments ont chacun une partie réelle et une partie imaginaire provenant d'un deuxième ensemble de nombres réels,
les N séquences comprenant des séquences dont des éléments ont chacun une amplitude égale à M et une phase provenant d'un troisième ensemble de nombres réels, et
les N séquences comprenant des séquences dont des éléments proviennent d'un premier ensemble de nombres complexes, dans lequel N et L sont des entiers positifs et M est un nombre réel ; et
le traitement (102) d'un premier symbole à l'aide de la séquence à utiliser de manière à générer un second symbole,
**caractérisé en ce que**
le premier symbole comprend un symbole généré en exécutant un codage et une modulation sur des bits de données à transmettre, et les bits de données à transmettre comprennent des informations d'identification du terminal et des informations de la séquence à utiliser.

2. Procédé selon la revendication 1, dans lequel la valeur absolue d'intercorrélation entre deux séquences quelconques parmi les N séquences n'étant pas supérieure à un premier seuil prédéfini comprend l'une parmi :
la valeur absolue d'intercorrélation entre deux séquences quelconques, après normalisation de l'énergie de chacune des deux séquences quelconques, parmi les N séquences n'étant pas supérieure au premier seuil prédéfini, ou
la valeur absolue d'intercorrélation entre deux séquences quelconques, après normalisation de l'énergie de chacune des deux séquences quelconques, parmi les N séquences étant la même et étant égale au premier seuil prédéfini,
dans lequel le premier seuil prédéfini comprend 0,5, sqrt(2)/2, 0,8 ou sqrt((N-L)/(L*(N-1))), dans lequel sqrt() est une fonction racine carrée.

3. Procédé selon la revendication 1, dans lequel la somme des carrés d'éléments non diagonaux d'une matrice d'intercorrélation des N séquences étant égale à un second seuil prédéfini comprend :
la somme des carrés des éléments non diagonaux de la matrice d'intercorrélation des N séquences, après normalisation de l'énergie de chacune des N séquences, étant égale au second seuil prédéfini, dans lequel le second seuil prédéfini comprend N*(N-L)/L.

4. Procédé selon la revendication 1, dans lequel le premier ensemble de nombres réels comprend : {0, 1}, {-1, 1}, {-0,5, 0,5} ou {0, sqrt(2)}.

5. Procédé selon la revendication 1, dans lequel le deuxième ensemble de nombres réels comprend : {-1, 1}, {-sqrt(2)/2, sqrt(2)/2}, {-sqrt(2)/4, sqrt(2)/4}, {-1, 0, 1}, {-0,5, 0, 0,5}, {-0,5, -sqrt(2)/4, 0, sqrt(2)/4, 0,5}, {-sqrt(2), 0, sqrt (2)} ou {-3, -1, 1, 3}.

6. Procédé selon la revendication 1, dans lequel le troisième ensemble de nombres réels comprend : {-3, -1, 1, 3}*π/4, {0, 1, 2, 3}*π/2, {0, 1, 2, 3, 4, 5, 6, 7}*π/4, n*k*2π/N ou -n*k*2n/N, dans lequel k est un entier et n est un entier non négatif inférieur ou égal à N.

7. Procédé selon la revendication 1, dans lequel le premier ensemble de nombres complexes comprend :
{1+1i, -1+1i, -1-1i, 1-1i},
{(1+1i)/sqrt(2), (-1+1i)/sqrt(2), (-1-1i)/sqrt(2), (1-1i)/sqrt (2)},
{(1+1i)*sqrt(2)/4, (-1+1i)*sqrt(2)/4, (-1-1i)*sqrt(2)/4, (1-1i)*sqrt(2)/4},
{1+0i, 0+li, -1+0i, 0-1i},
{0,5+0i, 0+0,5i, -0,5+0i, 0-0,5i},
{1+1i, -1+1i, -1-1i, 1-1i, 0},
{1+0i, 0+1i, -1+0i, 0-1i, 0},
{0,5+0i, 0+0,5i, -0,5+0i, 0-0,5i, 0},
{0,5+0,5i, -0,5+0,5i, -0,5-0,5i, 0,5-0,5i, 0}, ou
{0, 1, 1+1i, 1i, -1+1i, -1, -1-1i, -1i, 1-1i}.

8. Procédé selon la revendication 1, dans lequel l'ensemble de séquences comprend l'un des ensembles de séquences représentés dans le Tableau 1, le Tableau 2, le Tableau 3, le Tableau 4 et le Tableau 5 :
**Tableau 1**
| indice de séquence | éléments de séquence | | | |
|---|---|---|---|---|
| 0 | 1 | 1 | 1 | 1 |
| 1 | 1 | exp (-j*1*1*2π/13) | exp (-j*1*3*2π/13) | exp (-j*1*9*2π/13) |
| 2 | 1 | exp (-j*2*1*2π/13) | exp (-j*2*3*2π/13) | exp (-j*2*9*2π/13) |
| 3 | 1 | exp (-j*3*1*2π/13) | exp (-j*3*3*2π/13) | exp (-j*3*9*2π/13) |
| 4 | 1 | exp (-j*4*1*2π/13) | exp (-j*4*3*2π/13) | exp (-j*4*9*2π/13) |
| 5 | 1 | exp (-j*5*1*2π/13) | exp (-j*5*3*2π/13) | exp (-j*5*9*2π/13) |
| 6 | 1 | exp (-j*6*1*2π/13) | exp (-j*6*3*2π/13) | exp (-j*6*9*2π/13) |
| 7 | 1 | exp (-j*7*1*2π/13) | exp (-j*7*3*2π/13) | exp (-j*7*9*2π/13) |
| 8 | 1 | exp (-j*8*1*2π/13) | exp (-j*8*3*2π/13) | exp (-j*8*9*2π/13) |
| 9 | 1 | exp (-j*9*1*2π/13) | exp (-j*9*3*2π/13) | exp (-j*9*9*2π/13) |
| 10 | 1 | exp (-j*10*1*2π/13) | exp (-j*10*3*2π/13) | exp (-j* 10*9*2π/13) |
| 11 | 1 | exp (-j*11*1*2π/13) | exp (-j*11*3*2π/13) | exp (-j* 11* 9*2π/13) |
| 12 | 1 | exp (-j*12*1*2π/13) | exp (-j*12*3*2π/13) | exp (-j* 12*9*2π/13) |
**Tableau 2**
| indice de séquence | éléments de séquence | | | |
|---|---|---|---|---|
| 0 | 1+1i | 1+1i | 1+1i | -1-1i |
| 1 | 1+1i | 1+1i | -1+1i | -1+1i |
| 2 | 1+1i | 1+1i | -1-1i | 1+1i |
| 3 | 1+1i | 1+1i | 1-1i | 1-1i |
| 4 | 1+1i | -1+1i | 1+1i | -1+1i |
| 5 | 1+1i | -1+1i | -1+1i | 1+1i |
| 6 | 1+1i | -1+1i | -1-1i | 1-1i |
| 7 | 1+1i | -1+1i | 1-1i | -1-1i |
| 8 | 1+1i | -1-1i | 1+1i | 1+1i |
| 9 | 1+1i | -1-1i | -1+1i | 1-1i |
| 10 | 1+1i | -1-1i | -1-1i | -1-1i |
| 11 | 1+1i | -1-1i | 1-1i | -1+1i |
| 12 | 1+1i | 1-1i | 1+1i | 1-1i |
| 13 | 1+1i | 1-1i | -1+1i | -1-1i |
| 14 | 1+1i | 1-1i | -1-1i | -1+1i |
| 15 | 1+1i | 1-1i | 1-1i | 1+1i |
**Tableau 3**
| indice de séquence | éléments de séquence | | | |
|---|---|---|---|---|
| 0 | 1+0i | 1+0i | 1+0i | -1+0i |
| 1 | 1+0i | 1+0i | 0+1i | 0+1i |
| 2 | 1+0i | 1+0i | -1+0i | 1+0i |
| 3 | 1+0i | 1+0i | 0-1i | 0-1i |
| 4 | 1+0i | 0+1i | 1+0i | 0+1i |
| 5 | 1+0i | 0+1i | 0+1i | 1+0i |
| 6 | 1+0i | 0+1i | -1+0i | 0-1i |
| 7 | 1+0i | 0+1i | 0-1i | -1+0i |
| 8 | 1+0i | -1+0i | 1+0i | 1+0i |
| 9 | 1+0i | -1+0i | 0+1i | 0-1i |
| 10 | 1+0i | -1+0i | -1+0i | -1+0i |
| 11 | 1+0i | -1+0i | 0-1i | 0+1i |
| 12 | 1+0i | 0-1i | 1+0i | 0-1i |
| 13 | 1+0i | 0-1i | 0+1i | -1+0i |
| 14 | 1+0i | 0-1i | -1+0i | 0+1i |
| 15 | 1+0i | 0-1i | 0-1i | 1+0i |
**Tableau 4**
| indice de séquence | éléments de séquence | | | |
|---|---|---|---|---|
| 0 | 1+1i | 1+1i | 1+1i | 1+1i |
| 1 | 1+1i | 1+1i | 1+1i | 1+1i |
| 2 | 1+1i | 1+1i | -1-1i | 1+1i |
| 3 | 1+1i | 1+1i | -1-1i | -1-1i |
| 4 | 1+1i | 1+1i | -1+1i | -1+1i |
| 5 | 1+1i | 1+1i | -1+1i | 1-1i |
| 6 | 1+1i | 1+1i | 1-1i | -1+1i |
| 7 | 1+1i | 1+1i | 1-1i | 1-1i |
| 8 | 1+1i | -1+1i | 1+1i | -1+1i |
| 9 | 1+1i | -1+1i | 1+1i | 1-1i |
| 10 | 1+1i | -1+1i | -1-1i | -1+1i |
| 11 | 1+1i | -1+1i | -1-1i | 1-1i |
| 12 | 1+1i | -1+1i | -1+1i | 1+1i |
| 13 | 1+1i | -1+1i | -1+1i | -1-1i |
| 14 | 1+1i | -1+1i | 1-1i | 1+1i |
| 15 | 1+1i | -1+1i | 1-1i | -1-1i |
| 16 | 1+1i | -1-1i | 1+1i | 1+1i |
| 17 | 1+1i | -1-1i | 1+1i | -1-1i |
| 18 | 1+1i | -1-1i | -1-1i | 1+1i |
| 19 | 1+1i | -1-1i | -1-1i | -1-1i |
| 20 | 1+1i | -1-1i | -1+1i | -1+1i |
| 21 | 1+1i | -1-1i | -1+1i | 1-1i |
| 22 | 1+1i | -1-1i | 1-1i | -1+1i |
| 23 | 1+1i | -1-1i | 1-1i | 1-1i |
| 24 | 1+1i | 1-1i | 1+1i | -1+1i |
| 25 | 1+1i | 1-1i | 1+1i | 1-1i |
| 26 | 1+1i | 1-1i | -1-1i | -1+1i |
| 27 | 1+1i | 1-1i | -1-1i | 1-1i |
| 28 | 1+1i | 1-1i | -1+1i | 1+1i |
| 29 | 1+1i | 1-1i | -1+1i | -1-1i |
| 30 | 1+1i | 1-1i | 1-1i | 1+1i |
| 31 | 1+1i | 1-1i | 1-1i | -1-1i |
**Tableau 5**
| indice de séquence | éléments de séquence | | | |
|---|---|---|---|---|
| 0 | 1+1i | 1+1i | 1+1i | 1+1i |
| 1 | 1+1i | 1+1i | 1+1i | -1+1i |
| 2 | 1+1i | 1+1i | 1+1i | -1-1i |
| 3 | 1+1i | 1+1i | 1+1i | 1-1i |
| 4 | 1+1i | 1+1i | -1+1i | 1+1i |
| 5 | 1+1i | 1+1i | -1+1i | -1+1i |
| 6 | 1+1i | 1+1i | -1+1i | -1-1i |
| 7 | 1+1i | 1+1i | -1+1i | 1-1i |
| 8 | 1+1i | 1+1i | -1-1i | 1+1i |
| 9 | 1+1i | 1+1i | -1-1i | -1+1i |
| 10 | 1+1i | 1+1i | -1-1i | -1-1i |
| 11 | 1+1i | 1+1i | -1-1i | 1-1i |
| 12 | 1+1i | 1+1i | 1-1i | 1+1i |
| 13 | 1+1i | 1+1i | 1-1i | -1+1i |
| 14 | 1+1i | 1+1i | 1-1i | -1-1i |
| 15 | 1+1i | 1+1i | 1-1i | 1-1i |
| 16 | 1+1i | -1+1i | 1+1i | 1+1i |
| 17 | 1+1i | -1+1i | 1+1i | -1+1i |
| 18 | 1+1i | -1+1i | 1+1i | -1-1i |
| 19 | 1+1i | -1+1i | 1+1i | 1-1i |
| 20 | 1+1i | -1+1i | -1+1i | 1+1i |
| 21 | 1+1i | -1+1i | -1+1i | -1+1i |
| 22 | 1+1i | -1+1i | -1+1i | -1-1i |
| 23 | 1+1i | -1+1i | -1+1i | 1-1i |
| 24 | 1+1i | -1+1i | -1-1i | 1+1i |
| 25 | 1+1i | -1+1i | -1-1i | -1+1i |
| 26 | 1+1i | -1+1i | -1-1i | -1-1i |
| 27 | 1+1i | -1+1i | -1-1i | 1-1i |
| 28 | 1+1i | -1+1i | 1-1i | 1+1i |
| 29 | 1+1i | -1+1i | 1-1i | -1+1i |
| 30 | 1+1i | -1+1i | 1-1i | -1-1i |
| 31 | 1+1i | -1+1i | 1-1i | 1-1i |
| 32 | 1+1i | -1-1i | 1+1i | 1+1i |
| 33 | 1+1i | -1-1i | 1+1i | -1+1i |
| 34 | 1+1i | -1-1i | 1+1i | -1-1i |
| 35 | 1+1i | -1-1i | 1+1i | 1-1i |
| 36 | 1+1i | -1-1i | -1+1i | 1+1i |
| 37 | 1+1i | -1-1i | -1+1i | -1+1i |
| 38 | 1+1i | -1-1i | -1+1i | -1-1i |
| 39 | 1+1i | -1-1i | -1+1i | 1-1i |
| 40 | 1+1i | -1-1i | -1-1i | 1+1i |
| 41 | 1+1i | -1-1i | -1-1i | -1+1i |
| 42 | 1+1i | -1-1i | -1-1i | -1-1i |
| 43 | 1+1i | -1-1i | -1-1i | 1-1i |
| 44 | 1+1i | -1-1i | 1-1i | 1+1i |
| 45 | 1+1i | -1-1i | 1-1i | -1+1i |
| 46 | 1+1i | -1-1i | 1-1i | -1-1i |
| 47 | 1+1i | -1-1i | 1-1i | 1-1i |
| 48 | 1+1i | 1-1i | 1+1i | 1+1i |
| 49 | 1+1i | 1-1i | 1+1i | -1+1i |
| 50 | 1+1i | 1-1i | 1+1i | -1-1i |
| 51 | 1+1i | 1-1i | 1+1i | 1-1i |
| 52 | 1+1i | 1-1i | -1+1i | 1+1i |
| 53 | 1+1i | 1-1i | -1+1i | -1+1i |
| 54 | 1+1i | 1-1i | -1+1i | -1-1i |
| 55 | 1+1i | 1-1i | -1+1i | 1-1i |
| 56 | 1+1i | 1-1i | -1-1i | 1+1i |
| 57 | 1+1i | 1-1i | -1-1i | -1+1i |
| 58 | 1+1i | 1-1i | -1-1i | -1-1i |
| 59 | 1+1i | 1-1i | -1-1i | 1-1i |
| 60 | 1+1i | 1-1i | 1-1i | 1+1i |
| 61 | 1+1i | 1-1i | 1-1i | -1+1i |
| 62 | 1+1i | 1-1i | 1-1i | -1-1i |
| 63 | 1+1i | 1-1i | 1-1i | 1-1i |
dans lequel i et j sont es unitès imaginaires ; de préférence, dans lequel l'ensemble de séquences comprend un ensemble de séquences composé d'un ensemble de séquences de matrices unitaires et d'un des ensembles de séquences représentés dans le Tableau 1, le Tableau 2, le Tableau 3, le Tableau 4 et le Tableau 5, dans lequel la longueur de chacune des séquences dans l'ensemble de séquences de matrices unitaires est la même que la longueur de chacune des séquences dans l'ensemble de séquences représenté dans le Tableau 1, le Tableau 2, le Tableau 3, le Tableau 4 ou le Tableau 5, et dans lequel l'ensemble de séquences de matrices unitaires comprend :
| indice de séquence | éléments de séquence | | | |
|---|---|---|---|---|
| 0 | 1*a | 0 | 0 | 0 |
| 1 | 0 | 1*a | 0 | 0 |
| 2 | 0 | 0 | 1*a | 0 |
| 3 | 0 | 0 | 0 | 1*a |
dans lequel a est un facteur de réglage d'énergie qui permet à l'énergie de chacune des séquences de l'ensemble de séquences de matrices unitaires d'être la même que l'énergie de chacune des séquences dans l'ensemble de séquences représenté dans le Tableau 1, le Tableau 2, le Tableau 3, le Tableau 4 ou le Tableau 5.

9. Procédé selon la revendication 1, dans lequel la détermination d'une séquence à utiliser à partir d'un ensemble de séquences comprend l'un parmi :
la sélection aléatoire de X séquences à partir de l'ensemble de séquences, et le fait de laisser les X séquences sélectionnées en tant que X séquences à utiliser ;
la sélection aléatoire de X séquences à partir de l'ensemble de séquences, la sélection aléatoire d'un décalage cyclique et
l'exécution d'un traitement de décalage cyclique sur chacune des X séquences sélectionnées selon le décalage cyclique pour obtenir X séquences à utiliser ;
la sélection aléatoire de X séquences à partir de l'ensemble de séquences, la sélection aléatoire d'un décalage cyclique pour chacune des X séquences sélectionnées et l'exécution d'un traitement de décalage cyclique sur chacune des X séquences sélectionnées selon le décalage cyclique correspondant pour obtenir X séquences à utiliser ; et
l'obtention de X séquences à partir de l'ensemble de séquences selon des informations de configuration de système, et
le fait de laisser les X séquences obtenues en tant que X séquences à utiliser, dans lequel X est un entier positif.

10. Procédé selon la revendication 1, dans lequel le traitement d'un premier symbole à l'aide de la séquence à utiliser de manière à générer un second symbole comprend :
l'exécution d'un processus d'étalement sur le premier symbole à l'aide de la séquence à utiliser de manière à générer un second symbole.

11. Procédé selon la revendication 1, dans lequel le premier symbole comprend en outre au moins l'un parmi : un symbole pilote et un signal de référence.

12. Procédé selon la revendication 1, dans lequel après le traitement d'un premier symbole à l'aide de la séquence à utiliser de manière à générer un second symbole, le procédé comprend en outre :
la transmission du second symbole ;
de préférence, dans lequel la transmission du second symbole comprend : la génération d'un signal par le second symbole sur une ressource de transmission, et la transmission du signal.

13. Terminal, comprenant :
un module de détermination (60), qui est configuré pour déterminer une séquence à utiliser à partir d'un ensemble de séquences, dans lequel l'ensemble de séquences comprend N séquences ayant une longueur de L et comprend au moins l'une des caractéristiques suivantes : une valeur absolue d'intercorrélation entre deux séquences quelconques parmi les N séquences n'étant pas supérieure à un premier seuil prédéfini, une somme des carrés d'éléments non diagonaux d'une matrice d'intercorrélation des N séquences étant égale à un second seuil prédéfini, les N séquences comprenant des séquences dont des éléments proviennent d'un premier ensemble de nombres réels, les N séquences comprenant des séquences dont des éléments ont chacun une partie réelle et une partie imaginaire provenant d'un deuxième ensemble de nombres réels,
les N séquences comprenant des séquences dont des éléments ont chacun une amplitude égale à M et une phase provenant d'un troisième ensemble de nombres réels, et les N séquences comprenant des séquences dont des éléments proviennent d'un premier ensemble de nombres complexes, dans lequel N et L sont des entiers positifs et M est un nombre réel ; et
un module de génération (62), qui est configuré pour traiter un premier symbole à l'aide de la séquence à utiliser de manière à générer un second symbole, **caractérisé en ce que** le premier symbole comprend un symbole généré en exécutant un codage et une modulation sur des bits de données à transmettre, et les bits de données à transmettre comprennent des informations d'identification du terminal et des informations de la séquence à utiliser.
